# EUROPEAN PATENT APPLICATION

(11) **EP 4 633 076 A1**
(43) Date of publication of application: **15.10.2025**
(21) Application number: 23899719.1
(22) Date of filing: 15.11.2023
(51) Int. Cl.: H04L 5/00, H04W 48/10

(54) **METHOD AND APPARATUS USED IN COMMUNICATION NODE FOR WIRELESS COMMUNICATION**

(30) Priority: 08.12.2022 CN 202211568827
(71) Applicant: SHANGHAI LANGBO COMMUNICATION TECHNOLOGY COMPANY LIMITED, Shanghai 200240 (CN)
(72) Inventor: YU, Qiaoling, Shanghai 201206 (CN); ZHANG, Xiaobo, Shanghai 201206 (CN)
(74) Representative: Gunzelmann, Rainer
(86) International application number: PCT/CN2023/131680
(87) International publication number: WO 2024/120139

(57) **Abstract**

A method and apparatus used in a communication node for wireless communication. The communication node receiving first broadcast information on a PBCH of a first cell, wherein the first broadcast information comprises a first bit group, and at least one bit comprised in the first bit group does not belong to a cellBarred domain and does not belong to an intraFreqReselection domain; and obtaining an SIB of the first cell, wherein the SIB of the first cell comprises at least SIB1. The obtaining an SIB of the first cell relies on the first bit group. The first broadcast information comprises at least the cellBarred domain in the cellBarred domain and the intraFreqReselection domain. A first node is not a RedCap user equipment. The first node cannot support a NTN or access of the first node is not for the NTN. By means of the method, the cell access performance can be optimized.

## Description

### Technical Field

The present application relates to a transmission method and apparatus in a wireless communication system, in particular to a transmission method and apparatus for system information acquisition.

### Background Art

Network Energy Saving (NES) is of great significance for environmental sustainability, the reduction of the impact on environment (greenhouse gas emissions), and the saving of operating costs. As 5G (the 5th Generation Partnership Project) becomes more prevalent across industries and geographic regions, much higher data rates are required to handle more advanced services and applications (such as XR), resulting in increasingly dense networks, and the usage of more antennas, greater bandwidth, and more frequency bands. In order to keep the impact of 5G on the environment within a controllable range, new solutions need to be studied to improve network energy saving. Therefore, the 3GPP (the 3rd Generation Partnership Project) RAN#94 meeting approved a study item (SI) of the "Study on network energy savings", which supports technical enhancements in time domain, frequency domain, spatial domain, power domain, etc.

### Summary of the Invention

In the prior art, for UE (User Equipment) that is not capable of supporting an NTN (Non-Terrestrial Network) or access of the first node is not for the NTN, if the UE is non-RedCap (Reduced Capability) UE, after the UE obtains an MIB (Master Information Block) message of a cell by monitoring an SSB (Synchronization Signal Block), only when the cellBarred domain in the MIB message indicates that the cell is not barred, and the MIB message indicates the presence of an SIB1 (System Information Block 1) message, the UE obtains the SIB1 of the cell according to a pdcch-ConfigSIB 1 indicated by the MIB. Reducing the transmission of a PSS (Primary synchronization signal) or an SSS (Secondary synchronization signal) or a PBCH (Physical broadcast channel) or an SIB1 of a network energy-saving cell is an implementation way to reduce network power consumption. This implementation way will affect UE that does not support network energy saving or UE that does not want to access the network energy-saving cell. Therefore, enhancements are required to reduce the impact on these pieces of UE.

In response to the above problems, the present application provides a solution for system information acquisition. In the description of the above problems, an NR (New Radio) system is used as an example. The present application is also applicable to scenarios such as an LTE (Long-Term Evolution) system or an LTE-A (LTE Advanced) system. Further, although the present application provides a specific implementation way for network energy saving, the present application can also be used in scenarios such as a specific network to achieve technical effects similar to network energy saving. Further, although the original intention of the present application is for a Uu air interface, the present application can also be used for a PC5 interface. Further, although the original intention of the present application is for scenarios between terminals and base stations, the present application is also applicable to a V2X (Vehicle-to-Everything) scenario, as well as communication scenarios between terminals and relays and between relays and base stations to achieve similar technical effects as those in the scenarios between terminals and base stations. Further, although the original intention of the present application is for scenarios between terminals and base stations, the present application is also applicable to a communication scenario of IAB (Integrated Access and Backhaul) to achieve similar technical effects as those in the scenarios between terminals and base stations. Further, although the original intention of the present application is for scenarios of terrestrial networks, the present application is also applicable to communication scenarios of non-terrestrial networks to achieve similar technical effects as those in the scenario of the TNs. In addition, the use of a unified solution for different scenarios also helps to reduce hardware complexity and costs.

As one embodiment, the interpretation of the terminologies in the present application refers to the definition of the specification protocol TS36 series of 3GPP.

As one embodiment, the interpretation of the terminologies in the present application refers to the definition of the specification protocol TS38 series of 3GPP.

As one embodiment, the interpretation of the terminologies in the present application refers to the definition of the specification protocol TS37 series of 3GPP.

As one embodiment, the interpretation of the terminologies in the present application refers to the definition of the specification protocol of IEEEs (Institute of Electrical and Electronics Engineers).

It should be noted that, in the absence of conflicts, embodiments and features in the embodiments of any node of the present application may be applied to any other nodes. In the absence of conflicts, the embodiments and features in the embodiments of the present application may be arbitrarily combined with each other.

The present application discloses a method used in a first node for wireless communication, comprising:
receiving first broadcast information on a PBCH of a first cell, wherein the first broadcast information comprises a first bit group, and at least one bit comprised in the first bit group does not belong to a cellBarred domain and does not belong to an intraFreqReselection domain; and obtaining an SIB (System Information Block) of the first cell, wherein the SIB of the first cell comprises at least an SIB1, and
wherein the action of obtaining the SIB of the first cell relies on the first bit group; the first broadcast information comprises at least the cellBarred domain in the cellBarred domain and the intraFreqReselection domain; the first node is not RedCap user equipment; and the first node is not capable of supporting an NTN or access of the first node is not for the NTN.

As one embodiment, the problem to be solved by the present application comprises: how to determine whether the SIB of the first cell is obtained.

As one embodiment, the problem to be solved by the present application comprises: how to determine whether the first cell can be accessed.

As one embodiment, the problem to be solved by the present application comprises: how to determine a next action after acquiring the first broadcast information.

As one embodiment, the characteristics of the above method comprise: the first node determines the obtaining of the SIB of the first cell according to the first bit group.

As one embodiment, the characteristics of the above method comprise: the first bit group is used to indicate that the first node can access the first cell.

As one embodiment, the benefits of the above method are as follows: avoid unnecessary system information acquisition.

As one embodiment, the benefits of the above method are as follows: avoid unnecessary access attempts.

As one embodiment, the benefits of the above method are as follows: optimize the network.

As one embodiment, the benefits of the above method are as follows: optimize access performance.

According to one aspect of the present application, the method is characterized in that a first radio signal is transmitted in a first time-frequency resource block,
wherein the first radio signal is used to request the transmission of the SIB of the first cell.

As one embodiment, the first bit group is used to determine the first time-frequency resource block.

According to one aspect of the present application, the method is characterized in that the action of obtaining the SIB of the first cell relying on the first bit group comprises: whether the first cell is allowed to be selected or re-selected relies on the first bit group; the first cell is allowed to be selected or re-selected when the value of the first bit subgroup in the first bit group belongs to a first candidate set; the first cell is not allowed to be selected or re-selected when the value of the first bit subgroup in the first bit group does not belong to the first candidate set; and the first candidate set comprises at least one integer, and the first bit subgroup is a subset of the first bit group.

According to one aspect of the present application, the method is characterized in that the action of obtaining an SIB of the first cell relying on the first bit group comprises: whether to perform cell selection or re-selection relies on the first bit group; the cell selection or re-selection is performed when the value of the first bit subgroup in the first bit group does not belong to the first candidate set; the cell selection or re-selection is not performed when the value of the first bit subgroup in the first bit group belongs to the first candidate set; the first candidate set comprises at least one integer, and the first bit subgroup is a subset of the first bit group.

According to one aspect of the present application, the method is characterized in that the action of obtaining an SIB of the first cell relying on the first bit group comprises: the first bit group is used to indicate at least one of the presence of the SIB of the first cell and time-frequency resources occupied by the SIB of the first cell.

According to one aspect of the present application, the method is characterized in that the first bit group comprises bits in a spare domain.

According to one aspect of the present application, the method is characterized in that the first bit group comprises bits in a first PBCH payload; the bits in the first PBCH payload are generated at a physical layer; and the first PBCH payload is not used for an ssb-SubcarrierOffset domain.

According to one aspect of the present application, the method is characterized in that the first bit group comprises at least some bits in the ssb-SubcarrierOffset domain.

According to one aspect of the present application, the method is characterized in that the first bit group comprises at least some bits in a pdcch-ConfigSIB1 domain.

According to one aspect of the present application, the method is characterized in that the cellBarred domain of the first broadcast information is set as barred.

As one embodiment, the problem to be solved by the present application comprises: when the cellBarred domain of the first broadcast information is set as barred, how to determine whether to obtain the SIB of the first cell.

As one embodiment, the problem to be solved by the present application comprises: when the cellBarred domain of the first broadcast information is set as barred, how to determine whether the first cell can be accessed.

As one embodiment, the characteristics of the above method comprise: when the cellBarred domain of the first broadcast information is set as barred, it is determined that the SIB of the first cell is obtained according to the first bit group.

As one embodiment, the characteristics of the above method comprise: when the cellBarred domain of the first broadcast information is set as barred, the first bit group is used to indicate that the first node can access the first cell.

As one embodiment, the benefits of the above method are as follows: for UE that does not support network energy saving or UE that does not want to access network energy-saving cells, unnecessary system information acquisition is avoided.

As one embodiment, the benefits of the above method are as follows: for UE that does not support network energy saving or UE that does not want to access network energy-saving cells, unnecessary access attempts are avoided.

As one embodiment, the benefits of the above method are as follows: reducing the impact on UE that does not support network energy saving or UE that does not want to access network energy-saving cells.

According to one aspect of the present application, the method is characterized in that the first node at least supports network energy saving.

The present application discloses a method used in a second node for wireless communication, comprising:
transmitting first broadcast information on a PBCH of a first cell, wherein the first broadcast information comprises a first bit group, and at least one bit comprised in the first bit group does not belong to a cellBarred domain and does not belong to an intraFreqReselection domain, and
wherein the first bit group is used to indicate that a first node obtains an SIB of the first cell, and the SIB of the first cell comprises at least an SIB1; the first broadcast information comprises at least the cellBarred domain in the cellBarred domain and the intraFreqReselection domain; the first node is not RedCap user equipment; and the first node is not capable of supporting an NTN or access of the first node is not for the NTN.

According to one aspect of the present application, the method is characterized in that a first radio signal is received,
wherein the first radio signal is transmitted on a first time-frequency resource block; and the first radio signal is used to request the transmission of the SIB of the first cell.

As one embodiment, the first bit group is used to determine the first time-frequency resource block.

According to one aspect of the present application, the method is characterized in that the action of obtaining the SIB of the first cell relying on the first bit group comprises: whether the first cell is allowed to be selected or re-selected relies on the first bit group; the first cell is allowed to be selected or re-selected when the value of the first bit subgroup in the first bit group belongs to a first candidate set; the first cell is not allowed to be selected or re-selected when the value of the first bit subgroup in the first bit group does not belong to the first candidate set; and the first candidate set comprises at least one integer, and the first bit subgroup is a subset of the first bit group.

According to one aspect of the present application, the method is characterized in that the action of obtaining the SIB of the first cell relying on the first bit group comprises: whether to perform cell selection or re-selection relies on the first bit group; the cell selection or re-selection is performed when the value of the first bit subgroup in the first bit group does not belong to the first candidate set; the cell selection or re-selection is not performed when the value of the first bit subgroup in the first bit group belongs to the first candidate set; the first candidate set comprises at least one integer, and the first bit subgroup is a subset of the first bit group.

According to one aspect of the present application, the method is characterized in that the action of obtaining the SIB of the first cell relying on the first bit group comprises: the first bit group is used to indicate at least one of the presence of the SIB of the first cell and time-frequency resources occupied by the SIB of the first cell.

According to one aspect of the present application, the method is characterized in that the first bit group comprises bits in a spare domain.

According to one aspect of the present application, the method is characterized in that the first bit group comprises bits in a first PBCH payload; the bits in the first PBCH payload are generated at a physical layer; and the first PBCH payload is not used for an ssb-SubcarrierOffset domain.

According to one aspect of the present application, the method is characterized in that the first bit group comprises at least some bits in the ssb-SubcarrierOffset domain.

According to one aspect of the present application, the method is characterized in that the first bit group comprises at least some bits in a pdcch-ConfigSIB 1 domain.

According to one aspect of the present application, the method is characterized in that the cellBarred domain of the first broadcast information is set as barred.

According to one aspect of the present application, the method is characterized in that the first node at least supports network energy saving.

The present application discloses a first node for wireless communication, comprising:
a first receiver, receiving first broadcast information on a PBCH of a first cell, wherein the first broadcast information comprises a first bit group, and at least one bit comprised in the first bit group does not belong to a cellBarred domain and does not belong to an intraFreqReselection domain; and obtaining an SIB of the first cell, wherein the SIB of the first cell comprises at least an SIB1, and
wherein the action of obtaining the SIB of the first cell relies on the first bit group; the first broadcast information comprises at least the cellBarred domain in the cellBarred domain and the intraFreqReselection domain; the first node is not RedCap user equipment; and the first node is not capable of supporting an NTN or access of the first node is not for the NTN.

The present application discloses a second node for wireless communication, comprising:
a second transmitter, transmitting first broadcast information on a PBCH of a first cell, wherein the first broadcast information comprises a first bit group, and at least one bit comprised in the first bit group does not belong to a cellBarred domain and does not belong to an intraFreqReselection domain, and
wherein the first bit group is used to indicate that the first node obtains an SIB of the first cell, and the SIB of the first cell comprises at least an SIB1; the first broadcast information comprises at least the cellBarred domain in the cellBarred domain and the intraFreqReselection domain; the first node is not RedCap user equipment; and the first node is not capable of supporting an NTN or access of the first node is not for the NTN.

The present application discloses a method used in a first node for wireless communication, comprising:
receiving second broadcast information on a PBCH of a first cell, wherein the second broadcast information comprises a first bit group, and at least one bit comprised in the first bit group does not belong to a cellBarred domain and does not belong to an intraFreqReselection domain; and performing cell selection or re-selection,
wherein the action of performing cell selection or re-selection relies on the first bit group; first broadcast information comprises at least the cellBarred domain in the cellBarred domain and the intraFreqReselection domain; the first node is not RedCap user equipment; and the first node is not capable of supporting an NTN or access of the first node is not for the NTN.

The present application discloses a method used in a second node for wireless communication, comprising:
transmitting second broadcast information on a PBCH of a first cell, wherein the second broadcast information comprises a first bit group, and at least one bit comprised in the first bit group does not belong to a cellBarred domain and does not belong to an intraFreqReselection domain,
wherein the first bit group is used to indicate that a first node performs cell selection or re-selection; first broadcast information comprises at least the cellBarred domain in the cellBarred domain and the intraFreqReselection domain; the first node is not RedCap user equipment; and the first node is not capable of supporting an NTN or access of the first node is not for the NTN.

The present application discloses a first node for wireless communication, comprising:
a first receiver, receiving second broadcast information on a PBCH of a first cell, wherein the second broadcast information comprises a first bit group, and at least one bit comprised in the first bit group does not belong to a cellBarred domain and does not belong to an intraFreqReselection domain; and performing cell selection or re-selection,
wherein the action of performing cell selection or re-selection relies on the first bit group; the first broadcast information comprises at least the cellBarred domain in the cellBarred domain and the intraFreqReselection domain; the first node is not RedCap user equipment; and the first node is not capable of supporting an NTN or access of the first node is not for the NTN.

The present application discloses a second node for wireless communication, comprising:
a second transmitter, transmitting second broadcast information on a PBCH of a first cell, wherein the second broadcast information comprises a first bit group, and at least one bit comprised in the first bit group does not belong to a cellBarred domain and does not belong to an intraFreqReselection domain, and
wherein the first bit group is used to indicate that a first node performs cell selection or re-selection; first broadcast information comprises at least the cellBarred domain in the cellBarred domain and the intraFreqReselection domain; the first node is not RedCap user equipment; and the first node is not capable of supporting an NTN or access of the first node is not for the NTN.

As one embodiment, compared with the traditional solution, the present application has the following advantages:
- . Avoid unnecessary system information acquisition;
- . Avoid unnecessary access attempts;
- . Reduce the impact on UE that does not support network energy saving or UE that does not want to access network energy-saving cells;
- . Optimize the network;
- . Optimize access performance.

### Brief Description of the Drawings

Other features, purposes and advantages of the present application will become more apparent from reading the detailed description of the non-limiting embodiments made with reference to the following figures:
FIG. 1 shows a flowchart of transmission of first broadcast information and an SIB according to one embodiment of the present application;
FIG. 2 shows a schematic diagram of a network architecture according to one embodiment of the present application;
FIG. 3 shows a schematic diagram of an embodiment of a radio protocol architecture for a user plane and a control plane according to one embodiment of the present application;
FIG. 4 shows a schematic diagram of a first communication device and a second communication device according to one embodiment of the present application;
FIG. 5 shows a flowchart of radio signal transmission according to one embodiment of the present application;
FIG. 6 shows a flowchart of radio signal transmission according to still another embodiment of the present application;
FIG. 7 shows a flowchart of radio signal transmission according to another embodiment of the present application;
FIG. 8 shows a schematic diagram of obtaining an SIB of a first cell relying on a first bit group according to one embodiment of the present application;
FIG. 9 shows a schematic diagram of obtaining an SIB of a first cell relying on a first bit group according to still another embodiment of the present application;
FIG. 10 shows a schematic diagram of obtaining an SIB of a first cell relying on a first bit group according to another embodiment of the present application;
FIG. 11 shows a schematic diagram of a first bit group comprising bits in a spare domain according to one embodiment of the present application;
FIG. 12 shows a schematic diagram of a first bit group comprising bits in a first PBCH payload according to one embodiment of the present application;
FIG. 13 shows a schematic diagram of a first bit group comprising at least some bits in an ssb-SubcarrierOffset domain according to one embodiment of the present application;
FIG. 14 shows a schematic diagram of a first bit group comprising at least some bits in a pdcch-ConfigSIB1 domain according to one embodiment of the present application;
FIG. 15 shows a schematic diagram of a cellBarred domain of first broadcast information being set as barred according to one embodiment of the present application;
FIG. 16 shows a structural block diagram of a processing apparatus in a first node according to one embodiment of the present application;
FIG. 17 shows a structural block diagram of a processing apparatus in a second node according to one embodiment of the present application; and
FIG. 18 shows a flowchart of radio signal transmission according to yet another embodiment of one embodiment of the present application.

### Detailed Description of Embodiments

The technical solution of the present application will be further described in detail below in conjunction with the accompanying drawings. It should be noted that, in the absence of conflicts, embodiments and features in the embodiments of the present application may be arbitrarily combined with each other.

### Embodiment 1

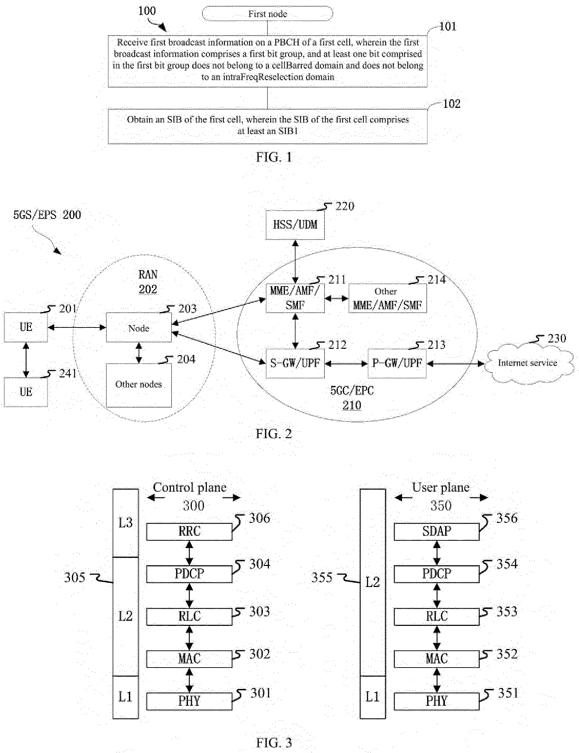

Embodiment 1 illustrates a flowchart of transmission of first broadcast information and an SIB according to one embodiment of the present application, as shown in FIG. 1. In FIG. 1, each block represents one step, and it should be particularly emphasized that the order of the blocks in the figure does not represent the chronological relationship between the steps represented.

In Embodiment 1, in step 101, a first node in the present application receives first broadcast information on a PBCH of a first cell, wherein the first broadcast information comprises a first bit group, and at least one bit comprised in the first bit group does not belong to a cellBarred domain and does not belong to an intraFreqReselection domain; and in step 102, obtains an SIB of the first cell, wherein the SIB of the first cell comprises at least an SIB1, and wherein the action of obtaining the SIB of the first cell relies on the first bit group; the first broadcast information comprises at least the cellBarred domain in the cellBarred domain and the intraFreqReselection domain; the first node is not RedCap user equipment; and the first node is not capable of supporting an NTN or access of the first node is not for the NTN.

As one embodiment, the PBCH of the first cell comprises a DM-RS (Demodulation Reference Signal) of the PBCH.

As one embodiment, the PBCH of the first cell belongs to one SSB of the first cell.

As one embodiment, the PBCH of the first cell is related to one SSB of the first cell.

As one embodiment, the PBCH of the first cell is related to one PSS of the first cell.

As one embodiment, the PBCH of the first cell is related to both one PSS and one SSS of the first cell.

As one embodiment, the PBCH of the first cell only carries bits generated at a physical layer.

As one embodiment, the PBCH of the first cell carries the bits generated at the physical layer and bits delivered to the physical layer by a higher layer.

As one embodiment, the first cell is one NR cell.

As one embodiment, the first cell is one LTE cell.

As one embodiment, the first cell is one physical cell.

As one embodiment, the first cell is allocated one physical layer cell identity (physical layer ID).

As one embodiment, the first cell is allocated one PCI (Physical Cell identity).

As one embodiment, the first cell broadcasts an SSB (Synchronization Signal Block).

As one embodiment, the first cell broadcasts a PSS (Primary synchronization signal).

As one embodiment, the first cell broadcasts an SSS (Secondary synchronization signal).

As one embodiment, the action of receiving the first broadcast information on the PBCH of the first cell comprises: receiving the PBCH of the first cell.

As one embodiment, the action of receiving the first broadcast information on the PBCH of the first cell comprises: acquiring an MIB of the first cell.

As one embodiment, the action of receiving the first broadcast information on the PBCH of the first cell comprises: receiving the PBCH of the first cell and acquiring the MIB of the first cell.

As one embodiment, the first broadcast information indicates configuration information of the first cell.

As one embodiment, a recipient of the first broadcast information is a piece of user equipment.

As one embodiment, the recipient of the first broadcast information comprises at least one piece of user equipment.

As one embodiment, the recipient of the first broadcast information comprises at least one base station device.

As one embodiment, the recipient of the first broadcast information comprises a plurality of pieces of user equipment, and the first node is one of the plurality of pieces of user equipment.

As one embodiment, the recipient of the first broadcast information comprises a plurality of IAB-MTs, and the first node is one IAB device among the plurality of pieces of user equipment.

As one embodiment, when the first broadcast information is received, the first node is in an RRC_IDLE state.

As one embodiment, when the first broadcast information is received, the first node is in an RRC_INACTIVE state.

As one embodiment, when the first broadcast information is received, the first node is in an RRC_CONNECTED state and T311 is operating.

As one embodiment, when the first broadcast information is received, the first node is in the RRC_IDLE state or the RRC_INACTIVE state, or the first node is in the RRC_CONNECTED state and T311 is operating.

As one embodiment, the PBCH of the first cell carries an MIB message, and the first broadcast information comprises the MIB message.

As one embodiment, the PBCH of the first cell does not carry the MIB message, and the first broadcast information does not comprise the MIB message.

As one embodiment, each bit in the first broadcast information belongs to an RRC (Radio Resource Control) message.

As one embodiment, at least one bit in the first broadcast information does not belong to the RRC message.

As one embodiment, 8 bits in the first broadcast information do not belong to the RRC message.

As one embodiment, any bit in the first broadcast information does not belong to the RRC message.

As one embodiment, the first broadcast information comprises the MIB message.

As one embodiment, the first broadcast information consists of the MIB message.

As one embodiment, the MIB message is the RRC message.

As one embodiment, the MIB message is a higher-layer message.

As one embodiment, a logical channel of the MIB message is a BCCH (Broadcast Control Channel).

As one embodiment, the MIB message is generated at an RRC sublayer.

As one embodiment, the first broadcast information comprises a PBCH payload generated at the physical layer.

As one embodiment, the first broadcast information consists of the PBCH payload generated at the physical layer.

As one embodiment, the PBCH payload generated at the physical layer is not mapped to the BCCH.

As one embodiment, the PBCH payload generated at the physical layer does not belong to the RRC message.

As one embodiment, the PBCH payload generated at the physical layer is generated at the physical layer.

As one embodiment, the PBCH payload generated at the physical layer consists of a positive integer number of bits.

As one embodiment, the first broadcast information comprises the MIB message and the PBCH payload generated at the physical layer.

As one embodiment, the first broadcast information consists of the MIB message and the PBCH payload generated at the physical layer.

As one sub-embodiment of this embodiment, the MIB message is mapped to all bits or some bits in a̅₀, a̅₁, a̅₂, a̅₃, . . . , a̅_{A̅-1}, wherein A̅ is a load size of the PBCH payload generated by a higher layer of the first node; and the higher layer is a protocol layer above the physical layer.

As one sub-embodiment of this embodiment, a̅₀, a̅₁, a̅₂, a̅₃, . . . , a̅_{A̅-1} is delivered to the physical layer of the first node by the higher layer of the first node.

As one sub-embodiment of this embodiment, the PBCH payload generated at the physical layer comprises at least one of a̅_̅{̅A̅}̅ or a̅_{A̅+1} or a̅_{A̅+2} or a̅_{A̅+3} or a̅_{A̅+4} or a̅_{A̅+5} or a̅_{A̅+6} or a̅_{A̅+7}.

As one sub-embodiment of this embodiment, the PBCH payload generated at the physical layer is a̅_̅{̅A̅}̅, a̅_{A̅+1}, a̅_{A̅+2}, a̅_{A̅+3}, a̅_{A̅+4}, a̅_{A̅+5}, a̅_{A̅+6} and a̅_{A̅+7}.

As one sub-embodiment of this embodiment, the a̅₀, a̅₁, a̅₂, a̅₃, . . . , a̅_{A̅-1} refers to 3GPP TS38.212.

As one sub-embodiment of this embodiment, a̅_̅{̅A̅}̅, a̅_{A̅+1}, a̅_{A̅+2}, a̅_{A̅+3}, a̅_{A̅+4}, a̅_{A̅+5}, a̅_{A̅+6}, and a̅_{A̅+7} refer to 3GPP TS38.212.

As one embodiment, any bit in the first bit group belongs to the MIB message.

As one embodiment, any bit in the first bit group belongs to the PBCH payload generated at the physical layer.

As one embodiment, at least some bits in the first bit group belong to the MIB message, and at least some bits in the first bit group belong to the PBCH payload generated at the physical layer.

As one embodiment, the first broadcast information comprises only the first bit group.

As one embodiment, the first broadcast information comprises at least one bit other than the first bit group.

As one embodiment, the first broadcast information is the first bit group.

As one embodiment, the first broadcast information comprises information indicated by the first bit group.

As one embodiment, the first bit group comprises a positive integer number of bits.

As one embodiment, the first bit group comprises a finite number of bits.

As one embodiment, the first bit group consists of 1 bit.

As one embodiment, the first bit group consists of 2 bits.

As one embodiment, the first bit group consists of 28 bits.

As one embodiment, the first bit group consists of less than 28 bits.

As one embodiment, there is no any bit between any two bits in the first bit group.

As one embodiment, there is no any bit other than the first broadcast information between any two bits in the first bit group.

As one embodiment, there are two bits in the first bit group, and at least one bit is comprised between the two bits.

As one embodiment, there are two bits in the first bit group, and at least one bit other than the first broadcast information is comprised between the two bits.

As one embodiment, bits comprised in the first bit group are continuous.

As one embodiment, the bits comprised in the first bit group are discontinuous.

As one embodiment, any bit in the first bit group belongs to the MIB message.

As one embodiment, any bit in the first bit group belongs to the PBCH payload generated at the physical layer.

As one embodiment, at least some bits in the first bit group belong to the MIB message, and at least some bits in the first bit group belong to the PBCH payload generated at the physical layer.

As one embodiment, any bit comprised in the first bit group does not belong to the cellBarred domain and does not belong to the intraFreqReselection domain.

As one embodiment, any bit comprised in the first bit group does not belong to the cellBarred domain and does not belong to the intraFreqReselection domain.

As one embodiment, the first bit group comprises only one bit, and the only one bit is not the cellBarred domain and is not the intraFreqReselection domain.

As one embodiment, the action of obtaining the SIB of the first cell comprises: receiving the SIB of the first message.

As one embodiment, action of obtaining the SIB of the first cell comprises: detecting the SIB of the first message.

As one embodiment, the action of obtaining the SIB of the first cell comprises: monitoring the SIB of the first message.

As one embodiment, the action of obtaining the SIB of the first cell comprises: applying the first broadcast information.

As one embodiment, the SIB of the first cell comprises only the SIB1.

As one embodiment, the SIB of the first cell refers to the SIB1 of the first cell.

As one embodiment, the SIB of the first cell comprises only the SIB1 of the first cell.

As one embodiment, the SIB of the first cell comprises at least the SIB1 of the first cell.

As one embodiment, the SIB of the first cell comprises the SIB1 and at least one SIB other than the SIB1.

As one embodiment, the SIB of the first cell comprises an SIB2.

As one embodiment, the SIB of the first cell comprises an SIB3.

As one embodiment, the action of obtaining the SIB of the first cell is after the action of receiving the first broadcast information on the PBCH of the first cell.

As one embodiment, in response to receiving the first broadcast information on the PBCH of the first cell, the SIB of the first cell is requested.

As one embodiment, in response to receiving the first broadcast information on the PBCH of the first cell, the SIB of the first cell is obtained.

As one embodiment, in response to receiving the first broadcast information on the PBCH of the first cell, the first broadcast information is applied.

As one embodiment, the action that the first broadcast information is applied comprises: applying the configuration information of the first cell indicated by the first broadcast information.

As one embodiment, the action that the first broadcast information is applied comprises: applying an SFN of the first cell indicated by the first broadcast information; and the first broadcast information comprises a systemFrameNumber domain, and the systemFrameNumber domain indicates 6 most significant bits (MSB) of the SFN of the first cell.

As one embodiment, the action that the first broadcast information is applied comprises: applying the position of the (first) DM-RS for uplink and downlink of the first cell indicated by the first broadcast information; and the first broadcast information comprises a dmrs-TypeA-Position domain, and the dmrs-TypeA-Position domain indicates the position of the (first) DM-RS for uplink and downlink of the first cell.

As one embodiment, in response to receiving the first broadcast information on the PBCH of the first cell, the first node does not consider the first cell to be a barred cell.

As one embodiment, in response to receiving the first broadcast information on the PBCH of the first cell, the first node does not perform a cell selection or re-selection process.

As one embodiment, in response to receiving the first broadcast information on the PBCH of the first cell, the first node does not perform cell re-selection to other cells on the same frequency as the first cell.

As one embodiment, within the time interval between receiving the first broadcast information on the PBCH of the first cell and obtaining the SIB of the first cell, the first node does not perform a cell selection or re-selection.

As one embodiment, the first broadcast information indicates the configuration information of a PDCCH (Physical Downlink Control Channel) used to obtain the SIB of the first cell.

As one embodiment, the first broadcast information does not indicate the configuration information of the PDCCH used to obtain the SIB of the first cell.

As one embodiment, if the first broadcast information indicates the configuration information of the PDCCH used to obtain the SIB of the first cell, the SIB of the first cell is obtained according to the configuration information of the PDCCH used to obtain the SIB of the first cell.

As one embodiment, if the first broadcast information does not indicate the configuration information of the PDCCH used to obtain the SIB of the first cell, a request is made to obtain the SIB of the first cell.

As one embodiment, the action of obtaining the SIB of the first cell relying on the first bit group means: the action of obtaining the SIB of the first cell relies on the first bit group in the first broadcast information.

As one embodiment, the action of obtaining the SIB of the first cell relying on the first bit group comprises: the action of obtaining the SIB of the first cell relies on the value of the first bit group.

As one embodiment, the action of obtaining the SIB of the first cell relying on the first bit group means: the action of obtaining the SIB of the first cell relies on the value of the first bit group in the first broadcast information.

As one embodiment, the action of obtaining the SIB of the first cell relying on the first bit group comprises: the first bit group is used to trigger the action of obtaining the SIB of the first cell.

As one embodiment, the action of obtaining the SIB of the first cell relying on the first bit group comprises: the first bit group is used to determine the performing of the action of obtaining the SIB of the first cell.

As an embodiment, the action of obtaining the SIB of the first cell relying on the first bit group comprises: the action of obtaining the SIB of the first cell is related to the first bit group.

As one embodiment, the action of obtaining the SIB of the first cell relying on the first bit group comprises: the action of obtaining the SIB of the first cell relies on each bit in the first bit group.

As one embodiment, the action of obtaining the SIB of the first cell relying on the first bit group comprises: the action of obtaining the SIB of the first cell relies on at least one bit in the first bit group.

As one embodiment, the action of obtaining the SIB of the first cell relying on the first bit group comprises: the action of obtaining the SIB of the first cell relies on some bits in the first bit group.

As one embodiment, the action of obtaining the SIB of the first cell relying on the first bit group comprises: obtaining the SIB of the first cell relies on the state of the first bit group.

As one embodiment, the first broadcast information comprises one MIB message, the MIB message comprising the cellBarred domain.

As one embodiment, the first broadcast information comprises one MIB message, the MIB message comprising the cellBarred domain and the intraFreqReselection domain.

As one embodiment, the first broadcast information comprises the cellBarred domain, and the first broadcast information comprises the intraFreqReselection domain.

As one sub-embodiment of this embodiment, the cellBarred domain and the intraFreqReselection domain belong to the MIB message.

As one sub-embodiment of this embodiment, the cellBarred domain and the intraFreqReselection domain belong to the PBCH payload generated at the physical layer.

As one sub-embodiment of this embodiment, the cellBarred domain and the intraFreqReselection domain are respectively one bit in the PBCH payload generated at the physical layer.

As one embodiment, the first broadcast information comprises the cellBarred domain, and the first broadcast information does not comprise the intraFreqReselection domain.

As one sub-embodiment of this embodiment, the cellBarred domain belongs to the MIB message.

As one sub-embodiment of this embodiment, the cellBarred domain belongs to the PBCH payload generated at the physical layer.

As one sub-embodiment of this embodiment, the cellBarred domain is one bit in the PBCH payload generated at the physical layer.

As one embodiment, the first node is UE other than the Redcap UE and the NTN UE.

As one embodiment, the access of the first node being not for the NTN comprises: the first cell accessed by the first node is not an NTN cell.

As one embodiment, the access of the first node being not for the NTN comprises: the first cell accessed by the first node is not for the access of the NTN.

As one embodiment, the access of the first node being not for the NTN comprises: the first broadcast information received by the first node on the PBCH of the first cell is not for the access of the NTN.

As one embodiment, the access of the first node being not for the NTN comprises: the first node is not for accessing the NTN.

As one embodiment, the access of the first node being not for the NTN comprises: initial access of the first node is not for the NTN.

As one embodiment, the access of the first node being not for NTN comprises: for the first node, the access is not for NTN.

As one embodiment, the first node being not capable of supporting the NTN means: the first node is not capable of NTN.

As one embodiment, the first node being not capable of supporting the NTN means: the first node does not support access to the NTN network.

As one embodiment, the UE capability of the first node is used to determine that the first node is not capable of supporting the NTN.

As one embodiment, the version number of the first node is used to determine that the first node is not capable of supporting the NTN.

As one embodiment, the first node is not RedCap user equipment, and the first node is not capable of supporting the NTN, and the access of the first node is not for the NTN.

As one embodiment, the first node is not RedCap user equipment, and the first node can support the NTN, and the access of the first node is not for the NTN.

As one embodiment, a sender of the SIB of the first cell is the same as the sender of the first broadcast information.

As one embodiment, the sender of the first SIB of the first cell is different from the sender of the first broadcast information.

As one embodiment, the first bit group indicates the presence of the SIB1.

As one embodiment, the first bit group indicates the presence of the SIB of the first cell.

As one embodiment, the first bit group indicates the time-frequency resources occupied by the SIB of the first cell.

As one embodiment, the first bit group indicates that the SIB1 is transmitted.

As one embodiment, the first bit group indicates that the SIB1 is transmitted on the first cell.

As one embodiment, the first bit group indicates that the SIB1 is transmitted on a second cell.

As one embodiment, the first bit group indicates the absence of the SIB1.

As one embodiment, the first bit group indicating the absence of SIB1 comprises: the first bit group does not indicate the time-frequency resources occupied by the SIB of the first cell.

As one embodiment, the first bit group indicating the absence of SIB1 comprises: the first bit group indicates that the SIB1 is not transmitted according to the modification period.

As one embodiment, the first bit group indicating the absence of the SIB1 comprises: the first bit group indicates that the SIB1 is not transmitted on the first cell.

As one embodiment, the first bit group indicating the absence of the SIB1 comprises: the first bit group indicates that the SIB1 is not transmitted on the second cell.

As one embodiment, the cellBarred domain of the first broadcast information is ignored.

As one embodiment, the cellBarred domain of the first broadcast information is not ignored.

### Embodiment 2

Embodiment 2 illustrates a schematic diagram of a network architecture according to one embodiment of the present application, as shown in FIG. 2. FIG. 2 illustrates a network architecture 200 of a 5G NR (New Radio)/LTE (Long-Term Evolution)/LTE-A (Long-Term Evolution Advanced) system. The 5G NR/LTE/LTE-A network architecture 200 may be referred to as a 5GS (5G System)/EPS (Evolved Packet System) 200 or some other suitable terminologies. The 5GS/EPS 200 comprises at least one of UE (User Equipment) 201, an RAN (Radio Access Network) 202, a 5GC (5G Core Network)/EPC (Evolved Packet Core) 210, an HSS (Home Subscriber Server)/UDM (Unified Data Management) 220, and an Internet service 230. The 5GS/EPS may be interconnected with other access networks, but these entities/interfaces are not shown for simplicity. As shown in figures, the 5GS/EPS provides packet switching services, but those skilled in the art will readily appreciate that the various concepts presented throughout the present application may be extended to networks that provide circuit switching services or other cellular networks. The RAN comprises a node 203 and other nodes 204. The node 203 provides user and control plane protocol termination towards the UE201. The node 203 may be connected to other nodes 204 via an Xn interface (e.g., backhaul)/X2 interface. The node 203 may also be referred to as a base station, a base transceiver station, a radio base station, a radio transceiving device, a transceiving device function, a basic service set (BSS), an extended service set (ESS), a TRP (transmitter receiver point), or some other suitable terminologies. The node 203 provides an access point to the 5GC/EPC210 for the UE201. Examples of the UE201 comprise a cellular phone, a smart phone, a session initiation protocol (SIP) phone, a laptop computer, a personal digital assistant (PDA), a satellite radio, a non-terrestrial base station communication, a satellite mobile communication, a global positioning system, a multimedia apparatus, a video apparatus, a digital audio player (e.g., an MP3 player), a camera, a game console, a drone, an aircraft, a narrowband Internet of Things device, a machine type communication device, a land vehicle, an automobile, a wearable device, or any other similarly functional apparatuses. Those skilled in the art may also refer to the UE201 as a mobile station, a subscriber station, a mobile unit, a subscriber unit, a wireless unit, a remote unit, a mobile apparatus, a wireless apparatus, a wireless communication apparatus, a remote apparatus, a mobile subscriber station, an access terminal, a mobile terminal, a wireless terminal, a remote terminal, a handset, a user agent, a mobile client, a client, or some other suitable terminologies. The node 203 is connected to 5GC/EPC210 via an S1/NG interface. The 5GC/EPC210 comprises an MME (Mobility Management Entity)/AMF (Authentication Management Field)/SMF (Session Management Function) 211, other MMEs/AMFs/SMFs 214, an S-GW (Service Gateway)/UPF (User Plane Function) 212, and a P-GW (Packet Data Network Gateway)/UPF213. The MME/AMF/SMF211 is a control node that processes a signaling between the UE201 and the 5GC/EPC210. Generally, the MME/AMF/SMF211 provides bearer and connection management. All user IP (Internet Protocol) packets are transmitted through the S-GW/UPF212, and the S-GW/UPF212 is connected to the P-GW/UPF213 by itself. The P-GW provides UE IP address allocation and other functions. The P-GW/UPF213 is connected to the Internet service 230. The Internet service 230 comprises Internet protocol services corresponding to operators, which may specifically comprise the Internet, an intranet, an IMS (IP Multimedia Subsystem), and a packet switching streaming service.

As one embodiment, the UE201 corresponds to a first node in the present application.

As one embodiment, the UE201 is one piece of user equipment.

As one embodiment, the UE201 is one ender.

As one embodiment, the UE201 is one aircraft.

As one embodiment, the UE201 is one vehicle-mounted terminal.

As one embodiment, the UE201 is one vessel.

As one embodiment, the UE201 is one Internet of Things terminal.

As one embodiment, the UE201 is one industrial Internet of Things terminal.

As one embodiment, the UE201 is one test device.

As one embodiment, the UE201 is one signaling tester.

As one embodiment, the UE201 is one relay.

As one embodiment, the node 203 corresponds to a second node in the present application.

As one embodiment, the node 203 is one piece of user equipment.

As one embodiment, the node 203 is one relay.

As one embodiment, the node 203 is one gateway.

As one embodiment, the node 203 is one base station (BS) device.

As one embodiment, the node 203 is one TRP.

As one embodiment, the user equipment supports transmission in a non-terrestrial network (NTN).

As one embodiment, the user equipment supports transmission in a terrestrial network (TN).

As one embodiment, the user equipment supports transmission in a network with a large-latency difference.

As one embodiment, the user equipment supports dual connection (DC) transmission.

As one embodiment, the user equipment supports low-latency and high-reliability transmission.

As one embodiment, the user equipment supports NR.

As one embodiment, the user equipment supports UTRA.

As one embodiment, the user equipment supports EUTRA.

As one embodiment, the base station device supports transmission in the non-terrestrial network.

As one embodiment, the base station device supports transmission in the network with a large-latency difference.

As one embodiment, the base station device supports transmission in the terrestrial network.

As one embodiment, the base station device supports network energy saving.

As one embodiment, the base station device comprises a macro cellular base station.

As one embodiment, the base station device comprises a micro cell base station.

As one embodiment, the base station device comprises a pico cell base station.

As one embodiment, the base station device comprises a Femtocell.

As one embodiment, the base station device comprises the base station device supporting a large-latency difference.

As one embodiment, the base station device comprises a flying platform device.

As one embodiment, the base station device comprises a satellite device.

As one embodiment, the base station device comprises a TRP (Transmitter Receiver Point).

As one embodiment, the base station device comprises a CU (Centralized Unit).

As one embodiment, the base station device comprises a DU (Distributed Unit).

As one embodiment, the base station device comprises a test device.

As one embodiment, the base station device comprises a signaling tester.

As one embodiment, the base station device comprises an IAB (Integrated Access and Backhaul)-node.

As one embodiment, the base station device comprises an IAB-donor.

As one embodiment, the base station device comprises an IAB-donor-CU.

As one embodiment, the base station device comprises an IAB-donor-DU.

As one embodiment, the base station device comprises an IAB-DU.

As one embodiment, the base station device comprises an IAB-MT.

As one embodiment, the base station device is one base transceiver station (BTS).

As one embodiment, the base station device is one Node B (NodeB, NB).

As one embodiment, the base station device is one gNB.

As one embodiment, the base station device is one eNB.

As one embodiment, the base station device is one ng-eNB.

As one embodiment, the base station device comprises one en-gNB.

As one embodiment, the relay comprises a relay.

As one embodiment, the relay comprises an L3 relay.

As one embodiment, the relay comprises an L2 relay.

As one embodiment, the relay comprises a router.

As one embodiment, the relay comprises a switch.

As one embodiment, the relay comprises user equipment.

As one embodiment, the relay comprises a base station device.

### Embodiment 3

Embodiment 3 shows a schematic diagram of an embodiment of a radio protocol architecture for a user plane and a control plane according to the present application, as shown in FIG. 3. FIG. 3 is a schematic diagram illustrating an embodiment of a radio protocol architecture for a user plane 350 and a control plane 300. FIG. 3 shows the radio protocol architecture for the control plane 300 using three layers: a Layer 1, a Layer 2, and a Layer 3. The Layer 1 (L1 layer) is the lowest layer and implements various PHY (physical layer) signal processing functions. The L1 layer will be referred to as a PHY301 herein. The layer 2 (L2 layer) 305 is above the PHY301 and comprises an MAC (Medium Access Control) sublayer 302, an RLC (Radio Link Control) sublayer 303, and a PDCP (Packet Data Convergence Protocol) sublayer 304. The PDCP sublayer 304 provides multiplexing between different radio bearers and logical channels. The PDCP sublayer 304 also provides security by encrypting data packets, and provides inter-cell mobility support. The RLC sublayer 303 provides segmentation and reassembly of upper-layer data packets, retransmission of lost data packets, and reordering of data packets to compensate for out-of-order reception due to an HARQ (Hybrid Automatic Repeat Request). The MAC sublayer 302 provides multiplexing between logical and transport channels. The MAC sublayer 302 is also responsible for allocating various radio resources (e.g., resource blocks) in a cell. The MAC sublayer 302 is also responsible for HARQ operations. An RRC (Radio Resource Control) sublayer 306 in the Layer 3 (L3 layer) in the control plane 300 is responsible for obtaining radio resources (i.e., radio bearers) and configuring lower layers using an RRC signaling. The radio protocol architecture for the user plane 350 comprises a Layer 1 (L1 layer) and a Layer 2 (L2 layer). The radio protocol architecture in the user plane 350 is substantially the same as the corresponding layers and sublayers in the control plane 300 for a physical layer 351, a PDCP sublayer 354 in an L2 layer 355, an RLC sublayer 353 in the L2 layer 355, and an MAC sublayer 352 in the L2 layer 355, but the PDCP sublayer 354 also provides header compression for the upper-layer data packets to reduce radio transmission overhead. The L2 layer 355 in the user plane 350 also comprises an SDAP (Service Data Adaptation Protocol) sublayer 356, and the SDAP sublayer 356 is responsible for mapping between QoS flows and data radio bearers (DRBs) to support the diversity of services.

As one embodiment, the radio protocol architecture in FIG. 3 is applicable to a first node in the present application.

As one embodiment, the radio protocol architecture in FIG. 3 is applicable to a second node in the present application.

As one embodiment, all or part of first broadcast information received on a PBCH of a first cell in the present application is generated at a higher layer.

As one embodiment, all or part of the first broadcast information received on the PBCH of the first cell in the present application is generated at the PHY301 or PHY351.

As one embodiment, all or part of the first broadcast information received on the PBCH of the first cell in the present application is generated at the MAC302 or MAC352.

As one embodiment, all or part of the first broadcast information received on the PBCH of the first cell in the present application is generated at the RRC306.

As one embodiment, all or part of a first bit group in the present application is generated at the higher layer.

As one embodiment, all or part of the first bit group in the present application is generated at the PHY301 or PHY351.

As one embodiment, all or part of the first bit group in the present application is generated at the MAC302 or MAC352.

As one embodiment, all or part of the first bit group in the present application is generated at the RRC306.

As one embodiment, an SIB of the first cell in the present application is generated at the RRC306.

As one embodiment, the SIB of the first cell in the present application is generated at the MAC302 or MAC352.

As one embodiment, the SIB of the first cell in the present application is generated at the PHY301 or PHY351.

As one embodiment, a first radio signal in the present application is generated at the PHY301 or PHY351.

As one embodiment, the first radio signal in the present application is generated at the MAC302 or MAC352.

### Embodiment 4

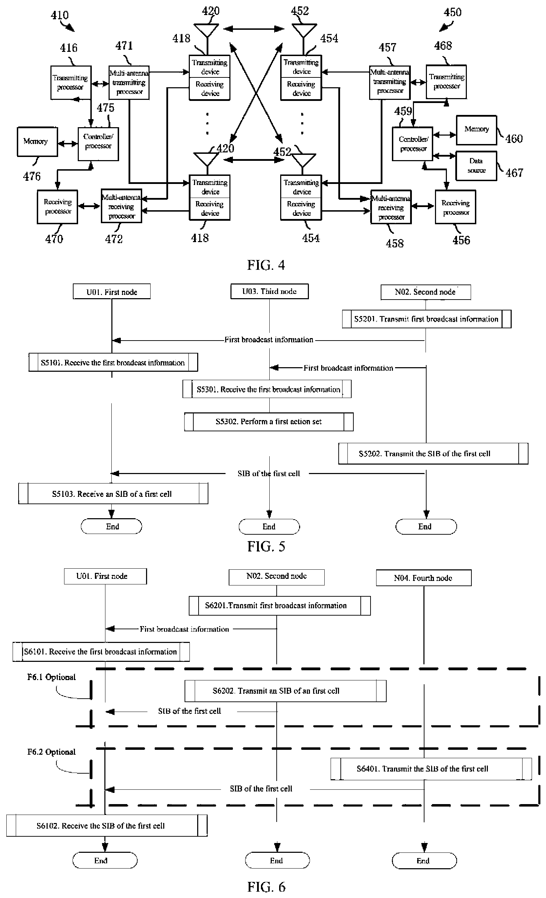

Embodiment 4 shows a schematic diagram of a first communication device and a second communication device according to the present application, as shown in FIG. 4. FIG. 4 is a block diagram of a first communication device 450 and a second communication device 410 communicating with each other in an access network.

The first communication device 450 comprises a controller/processor 459, a memory 460, a data source 467, a transmitting processor 468, a receiving processor 456, a multi-antenna transmitting processor 457, a multi-antenna receiving processor 458, a transmitting device/receiving device 454, and an antenna 452.

The second communication device 410 comprises a controller/processor 475, a memory 476, a receiving processor 470, a transmitting processor 416, a multi-antenna receiving processor 472, a multi-antenna transmitting processor 471, a transmitting device/receiving device 418, and an antenna 420.

In transmission from the second communication device 410 to the first communication device 450, at the second communication device 410, upper-layer data packets from a core network are provided to the controller/processor 475. The controller/processor 475 implements the functionality of an L2 layer. In the transmission from the second communication device 410 to the first communication device 450, the controller/processor 475 provides header compression, encryption, packet segmentation and reordering, multiplexing between logical and transport channels, and radio resource allocation to the first communication device 450 based on various priority metrics. The controller/processor 475 is also responsible for retransmission of lost packets and signalings to the first communication device 450. The transmitting processor 416 and the multi-antenna transmitting processor 471 implement various signal processing functions for an L1 layer (i.e., physical layer). The transmitting processor 416 implements encoding and interleaving to facilitate forward error correction (FEC) at the second communication device 410, as well as mapping of signal constellations based on various modulation schemes (e.g., binary phase shift keying (BPSK), quadrature phase shift keying (QPSK), M-phase shift keying (M-PSK), and M-quadrature amplitude modulation (M-QAM)). The multi-antenna transmitting processor 471 performs digital spatial precoding, comprising codebook-based precoding and non-codebook-based precoding, and beamforming processing on the encoded and modulated symbols to generate one or more spatial streams. The transmitting processor 416 then maps each spatial stream to a subcarrier, multiplexes the each spatial stream with a reference signal (e.g., pilot frequency) in a time domain and/or frequency domain, and then uses an inverse fast Fourier transform (IFFT) to produce a physical channel carrying a time-domain multi-carrier symbol stream. The multi-antenna transmitting processor 471 then performs a transmitting analog precoding/beamforming operation on the time-domain multi-carrier symbol stream. Each transmitting device 418 converts a baseband multi-carrier symbol stream provided by the multi-antenna transmitting processor 471 into a radio frequency stream, and then provides the radio frequency stream to different antennas 420.

In the transmission from the second communication device 410 to the first communication device 450, at the first communication device 450, each receiving device 454 receives a signal through a corresponding antenna 452 thereof. Each receiving device 454 recovers information modulated onto a radio frequency carrier, and converts the radio frequency stream into a baseband multi-carrier symbol stream and provides the baseband multi-carrier symbol stream to the receiving processor 456. The receiving processor 456 and the multi-antenna receiving processor 458 implement various signal processing functions of the L1 layer. The multi-antenna receiving processor 458 performs a receiving analog precoding/beamforming operation on the baseband multi-carrier symbol stream from the receiving device 454. The receiving processor 456 uses a fast Fourier transform (FFT) to convert the baseband multi-carrier symbol stream from the time domain to the frequency domain after the receiving analog precoding/beamforming operation. In the frequency domain, a physical layer data signal and a reference signal are demultiplexed by the receiving processor 456, wherein the reference signal will be used for channel estimation, and the data signal is recovered after multi-antenna detection in the multi-antenna receiving processor 458 to recover any spatial stream destined for the first communication device 450. The symbols on each spatial stream are demodulated and recovered in the receiving processor 456, and soft decisions are generated. The receiving processor 456 then decodes and deinterleaves the soft decisions to recover upper-layer data and control signals transmitted by the second communication device 410 on the physical channel. The upper-layer data and the control signals are then provided to the controller/processor 459. The controller/processor 459 implements the functions of the L2 layer. The controller/processor 459 may be associated with the memory 460 which stores program codes and data. The memory 460 may be referred to as a computer-readable medium. In the transmission from the second communication device 410 to the second communication device 450, the controller/processor 459 provides demultiplexing between transport and logical channels, packet reassembly, decryption, header decompression, and control signal processing to recover the upper-layer data packets from the core network. The upper-layer data packets are then provided to all protocol layers above the L2 layer. Various control signals may also be provided to an L3 for L3 processing.

In transmission from the first communication device 450 to the second communication device 410, at the first communication device 450, the upper-layer data packets are provided to the controller/processor 459 using the data source 467. The data source 467 represents all protocol layers above the L2 layer. Similar to the transmission function at the second communication device 410 described in the transmission from the second communication device 410 to the first communication device 450, the controller/processor 459 implements header compression, encryption, packet segmentation and reordering, and multiplexing between logical and transport channels based on radio resource allocation, and implements the functions of the L2 layer for the user plane and the control plane. The controller/processor 459 is also responsible for retransmission of lost packets and signalings to the second communication device 410. The transmitting processor 468 performs modulation mapping and channel coding processing, and the multi-antenna transmitting processor 457 performs digital multi-antenna spatial precoding, comprising codebook-based precoding and non-codebook-based precoding, and beamforming processing. Then, the transmitting processor 468 modulates the produced spatial stream into a multi-carrier/single-carrier symbol stream, which is provided to different antennas 452 by the transmitting device 454 after analog precoding/beamforming operations in the multi-antenna transmitting processor 457. Each transmitting device 454 first converts the baseband symbol stream provided by the multi-antenna transmitting processor 457 into a radio frequency symbol stream, and then provides the radio frequency symbol stream to the antenna 452.

In the transmission from the first communication device 450 to the second communication device 410, the function at the second communication device 410 is similar to the receiving function at the first communication device 450 described in the transmission from the second communication device 410 to the first communication device 450. Each receiving device 418 receives a radio frequency signal through a corresponding antenna 420 thereof, converts the received radio frequency signal into a baseband signal, and provides the baseband signal to the multi-antenna receiving processor 472 and the receiving processor 470. The receiving processor 470 and the multi-antenna receiving processor 472 jointly implement the functions of the L1 layer. The controller/processor 475 implements the functions of the L2 layer. The controller/processor 475 may be associated with the memory 476 which stores program codes and data. The memory 476 may be referred to as a computer-readable medium. In the transmission from the first communication device 450 to the second communication device 410, the controller/processor 475 provides demultiplexing between transport and logical channels, packet reassembly, decryption, header decompression, and control signal processing to recover upper-layer data packets from the UE450. The upper-layer data packets from the controller/processor 475 may be provided to the core network.

As one embodiment, the first communication device 450 comprises: at least one processor and at least one memory, wherein the at least one memory comprises a computer program code; and the at least one memory and the computer program code are configured to be used together with the at least one processor; and the first communication device 450 at least: receives first broadcast information on a PBCH of a first cell, wherein the first broadcast information comprises a first bit group, and at least one bit comprised in the first bit group does not belong to a cellBarred domain and does not belong to an intraFreqReselection domain; and obtains an SIB of the first cell, wherein the SIB of the first cell comprises at least an SIB1, and wherein the action of obtaining the SIB of the first cell relies on the first bit group; the first broadcast information comprises at least the cellBarred domain in the cellBarred domain and the intraFreqReselection domain; a first node is not RedCap user equipment; and the first node is not capable of supporting an NTN or access of the first node is not for the NTN.

As one embodiment, the first communication device 450 comprises: a memory storing a computer-readable instruction program, wherein the computer-readable instruction program generates actions when executed by at least one processor, the actions comprising: receiving the first broadcast information on the PBCH of the first cell, wherein the first broadcast information comprises the first bit group, at least one bit comprised in the first bit group does not belong to the cellBarred domain and does not belong to the intraFreqReselection domain; and obtaining the SIB of the first cell, wherein the SIB of the first cell comprises at least an SIB1, and wherein the action of obtaining the SIB of the first cell relies on the first bit group; the first broadcast information comprises at least the cellBarred domain in the cellBarred domain and the intraFreqReselection domain; the first node is not RedCap user equipment; and the first node is not capable of supporting an NTN or access of the first node is not for the NTN.

As one embodiment, the second communication device 410 comprises: at least one processor and at least one memory, wherein the at least one memory comprises a computer program code; and the at least one memory and the computer program code are configured to be used together with the at least one processor. The second communication device 410 at least: transmits the first broadcast information on the PBCH of the first cell, wherein the first broadcast information comprises the first bit group, and at least one bit comprised in the first bit group does not belong to the cellBarred domain and does not belong to the intraFreqReselection domain, and wherein the first bit group is used to indicate that the first node obtains the SIB of the first cell, and the SIB of the first cell comprises at least an SIB1; the first broadcast information comprises at least the cellBarred domain in the cellBarred domain and the intraFreqReselection domain; the first node is not RedCap user equipment; and the first node is not capable of supporting an NTN or access of the first node is not for the NTN.

As one embodiment, the second communication device 410 comprises: a memory storing a computer-readable instruction program, the computer-readable instruction program generating an action when executed by at least one processor, the action comprising: transmitting the first broadcast information on the PBCH of the first cell, wherein the first broadcast information comprise the first bit group, and at least one bit comprised in the first bit group does not belong to the cellBarred domain and does not belong to the intraFreqReselection domain, and wherein the first bit group is used to indicate that the first node obtains the SIB of the first cell, and the SIB of the first cell comprises at least an SIB1; the first broadcast information comprises at least the cellBarred domain in the cellBarred domain and the intraFreqReselection domain; the first node is not RedCap user equipment; and the first node is not capable of supporting an NTN or access of the first node is not for the NTN.

As one embodiment, at least one of the antenna 452, the receiving device 454, the receiving processor 456, and the controller/processor 459 is used to receive the first broadcast information on the PBCH of the first cell.

As one embodiment, at least one of the antenna 420, the transmitting device 418, the transmitting processor 416, and the controller/processor 475 is used to transmit the first broadcast information on the PBCH of the first cell.

As one embodiment, at least one of the antenna 452, the receiving device 454, the receiving processor 456, and the controller/processor 459 is used to receive the SIB of the first cell.

As one embodiment, at least one of the antenna 420, the transmitting device 418, the transmitting processor 416, and the controller/processor 475 is used to transmit the SIB of the first cell.

As one embodiment, at least one of the antenna 452, the transmitting device 454, the transmitting processor 468, and the controller/processor 459 is used to transmit a first radio signal.

As one embodiment, at least one of the antenna 420, the receiving device 418, the receiving processor 470, and the controller/processor 475 is used to receive the first radio signal.

As one embodiment, the first communication device 450 corresponds to the first node in the present application.

As one embodiment, the second communication device 410 corresponds to the second node in the present application.

As one embodiment, the first communication device 450 is one piece of user equipment.

As one embodiment, the first communication device 450 is one base station device.

As one embodiment, the first communication device 450 is one relay device.

As one embodiment, the second communication device 410 is one piece of user equipment.

As one embodiment, the second communication device 410 is one base station device.

As one embodiment, the second communication device 410 is one relay device.

### Embodiment 5

Embodiment 5 illustrates a flowchart of radio signal transmission according to one embodiment of the present application, as shown in FIG. 5. It should be particularly noted that the order in this example does not limit the signal transmission order and implementation order in the present application.

For **a first node U01**, in step S5101, first broadcast information is received on a PBCH of a first cell, wherein the first broadcast information comprises a first bit group, at least one bit comprised in the first bit group does not belong to a cellBarred domain and does not belong to an intraFreqReselection domain; and in step S5102, an SIB of the first cell is received, wherein the SIB of the first cell comprises at least an SIB1, and the action of obtaining the SIB of the first cell relies on the first bit group.

For **a third node U03**, in step S5301, the first broadcast information is received on the PBCH of the first cell, wherein the first broadcast information comprises the first bit group, at least one bit comprised in the first bit group does not belong to the cellBarred domain and does not belong to the intraFreqReselection domain; and in step S5302, a first action set is performed, the first action set doing not comprise the obtaining of the SIB of the first cell, wherein the SIB of the first cell comprises at least the SIB1.

For **a second node N02**, in step S5201, the first broadcast information is transmitted on the PBCH of the first cell; and in step S5202, the SIB of the first cell is transmitted.

In Embodiment 5, the first broadcast information comprises at least the cellBarred domain in the cellBarred domain and the intraFreqReselection domain; the first node U01 is not RedCap user equipment; the first node U01 is not capable of supporting an NTN or access of the first node U01 is not for the NTN; the third node U03 is not RedCap user equipment; and the third node U03 is not capable of supporting the NTN or access of the third node U03 is not for the NTN.

As one embodiment, in response to receiving the first broadcast information on the PBCH of the first cell, the third node U03 performs the first action set.

As one embodiment, within the time interval between receiving the first broadcast information on the PBCH of the first cell and performing the first action set, the third node U03 does not obtain the SIB of the first message.

As one embodiment, the action of performing the first action set relies on the type of the third node U03.

As one embodiment, the action of performing the first action set relies on the first bit group.

As one embodiment, the action of performing the first action set relies on the first bit group and the type of the third node U03.

As one embodiment, the type of the third node U03 is used to determine the performing of the first action set.

As one embodiment, the third node U03 not supporting network energy saving is used to determine the performing of the first action set.

As one embodiment, the third node U03 not wanting to access the network energy-saving cell is used to determine the performing of the first action set.

As one embodiment, the first action set comprises considering that the first cell is one barred cell.

As one embodiment, the first action set comprises performing a cell selection or re-selection process.

As one embodiment, the first action set comprises performing cell re-selection to other cells on the same frequency as the first cell.

As one embodiment, the first node U01 is one piece of user equipment.

As one embodiment, the first node U01 is one base station device.

As one embodiment, the first node U01 is one relay device.

As one embodiment, the first node U01 supports network energy saving.

As one embodiment, the first node U01 supports 3GPP Release 18.

As one embodiment, the first node U01 supports 3GPP Release 18 or a version after 3GPP Release 18.

As one embodiment, the first node U01 supports network energy saving and the first node U01 supports at least 3GPP Release 18.

As one embodiment, the first node U01 supports network energy saving and the first node U01 does not support at least 3GPP Release 18.

As one embodiment, the second node N02 is one base station device.

As one embodiment, the second node N02 is one piece of user equipment.

As one embodiment, the second node N02 is one relay device.

As one embodiment, the second node N02 is a maintenance base station of the first cell.

As one embodiment, the second node N02 is a sender of the first broadcast information.

As one embodiment, the second node N02 is the sender of the SIB.

As one embodiment, the third node U03 is one piece of user equipment.

As one embodiment, the third node U03 is one base station device.

As one embodiment, the third node U03 is one relay device.

As one embodiment, the third node U03 does not support network energy saving.

As one embodiment, the third node U03 does not support 3GPP Release 18.

As one embodiment, the third node U03 does not support 3GPP Release 18 or a version after 3GPP Release 18.

As one embodiment, the third node U03 supports 3GPP Release 14.

As one embodiment, the third node U03 supports 3GPP Release 15.

As one embodiment, the third node U03 supports 3GPP Release 16.

As one embodiment, the third node U03 supports 3GPP Release 17.

As one embodiment, the third node U03 does not want to access network energy-saving cells.

As one embodiment, the third node U03 supports network energy saving and the third node U03 does not want to access network energy-saving cells.

As one embodiment, the third node U03 does not support network energy saving and the first node U01 does not support at least 3GPP Release 18.

As one embodiment, the third node U03 does not support network energy saving and the first node U01 supports at least 3GPP Release 18.

As one embodiment, the first node U01 is one piece of user equipment, the second node N02 is one base station device, and the third node U03 is one piece of user equipment.

As one embodiment, the first node U01 is one piece of user equipment, the second node N02 is one piece of user equipment, and the third node U03 is one piece of user equipment.

As one embodiment, the first node U01 is one base station device, the second node N02 is one base station device, and the third node U03 is one base station device.

As one embodiment, the first node U01 is a node supporting network energy saving.

As one embodiment, the first node U01 is a piece of UE supporting network energy saving.

As one embodiment, the first node U01 is a terminal supporting network energy saving.

As one embodiment, the first node U01 is a test device supporting network energy saving.

As one embodiment, the first node U01 is a piece of NES UE.

As one embodiment, the first node U01 supports at least 3GPP Release 18.

As one sub-embodiment of this embodiment, the first node U01 only supports 3GPP Release 18.

As one sub-embodiment of this embodiment, the first node U01 supports 3GPP Release 18 and a version after 3GPP Release 18.

As one embodiment, the first node U01 does not support 3GPP Release 18.

As one sub-embodiment of this embodiment, the first node U01 supports 3GPP Release 15.

As one sub-embodiment of this embodiment, the first node U01 supports 3GPP Release 16.

As one sub-embodiment of this embodiment, the first node U01 supports 3GPP Release 17.

As one sub-embodiment of this embodiment, the first node U01 does not support 3GPP Release 18 and a version after 3GPP Release 18.

As one embodiment, the phrase that the first node U01 at least supports network energy saving comprises: the first node U01 supports network energy saving.

As one embodiment, the phrase the first node U01 at least supports network energy saving comprises: the first node U01 supports network energy saving and the first node U01 does not support at least 3GPP Release 18.

As one embodiment, only when the first node U01 at least supports network energy saving, the action of obtaining the SIB of the first cell relies on the first bit group.

As one embodiment, only when the cellBarred domain of the first broadcast information is set as barred and the first node U01 at least supports network energy saving, the action of obtaining the SIB of the first cell relies on the first bit group.

As one embodiment, if the cellBarred domain of the first broadcast information is set as barred and the first node U01 does not support network energy saving, the first node U01 considers that the first cell is barred.

As one embodiment, if the cellBarred domain of the first broadcast information is set as barred and the first node U01 does not support network energy saving, the first node U01 considers that the first cell is barred and performs cell re-selection to other cells on the same frequency as the first cell.

As one embodiment, the type of the first node U01 is used to determine the obtaining of the SIB of the first cell.

As one embodiment, the type of the first node U01 and the first bit group are used to determine the obtaining of the SIB of the first cell.

As one embodiment, the first node U01 supporting network energy saving is used to determine the obtaining of the SIB of the first cell.

As one embodiment, the first node U01 supports network energy saving, and the value of a first bit subgroup in the first bit group doing not belong to a first candidate set is used to determine the obtaining of the SIB of the first cell.

As one embodiment, the first node U01 is different from the third node U03.

As one embodiment, the first node U01 and the third node U03 are two pieces of different user equipment.

As one embodiment, the first node U01 and the third node U03 are two different terminals.

As one embodiment, the first node U01 and the third node U03 are of different types.

As one embodiment, 3GPP protocol versions supported by the first node U01 and the third node U03 are different.

As one embodiment, the UE capabilities of the first node U01 and the third node U03 are different.

As one embodiment, the first node U01 and the third node U03 are both within a coverage range of the first cell.

As one embodiment, the action of obtaining the SIB of the first cell relies on the type of the first node U01.

As one embodiment, the action of obtaining the SIB of the first cell relies on the first bit group and the type of the first node U01.

### Embodiment 6

Embodiment 6 illustrates a flowchart of radio signal transmission according to still another embodiment of the present application, as shown in FIG. 6. It should be particularly noted that the order in this example does not limit the signal transmission order and implementation order in the present application.

For **a first node U01**, in step S6101, first broadcast information is received on a PBCH of a first cell, wherein the first broadcast information comprises a first bit group, and at least one bit comprised in the first bit group does not belong to a cellBarred domain and does not belong to an intraFreqReselection domain; and in step S6102, an SIB of the first cell is obtained, wherein the SIB of the first cell comprises at least an SIB1.

For **a second node N02**, in step S6201, the first broadcast information is transmitted on the PBCH of the first cell; and in step S6202, the SIB of the first cell is transmitted.

For **a fourth node N04**, in step S6401, the SIB of the first cell is transmitted.

In Embodiment 6, the action of obtaining the SIB of the first cell relies on the first bit group; the first broadcast information comprises at least the cellBarred domain in the cellBarred domain and the intraFreqReselection domain; the first node U01 is not RedCap user equipment; and the first node U01 is not capable of supporting an NTN or access of the first node U01 is not for the NTN.

As one embodiment, only one of a dotted block F6.1 and a dotted block F6.2 exists.

As one embodiment, a sender of the SIB of the first cell is the second node N02.

As one embodiment, the sender of the SIB of the first cell is the fourth node N04.

As one embodiment, the fourth node N04 is one base station device.

As one embodiment, the fourth node N04 is one piece of user equipment.

As one embodiment, the fourth node N04 is one relay device.

As one embodiment, the first node U01 is resident on the fourth node N04.

As one embodiment, the first node U01 is resident on the second node N02.

As one embodiment, the second node N02 is a maintenance base station of the first cell.

As one embodiment, the fourth node N04 is a maintenance base station of the second cell.

As one embodiment, the first cell is related to the second cell.

As one embodiment, the first cell is one non-anchor cell.

As one embodiment, the first cell is one anchor cell.

As one embodiment, the second cell is one anchor cell.

As one embodiment, the second cell is one non-anchor cell.

As one embodiment, the first cell is an anchor carrier of the second cell.

As one embodiment, the second cell is an anchor carrier of the first cell.

As one embodiment, before the SIB of the first cell is received, a first radio signal is transmitted.

As one embodiment, before the SIB of the first cell is received, the first radio signal is not transmitted.

As one embodiment, the first broadcast information indicates the second cell.

As one embodiment, the first broadcast information indicates a PDCCH of the second cell.

As one embodiment, the first broadcast information indicates that the second cell is an anchor cell of the first cell.

As one embodiment, the first broadcast information indicates that the SIB of the first cell is obtained in the second cell.

### Embodiment 7

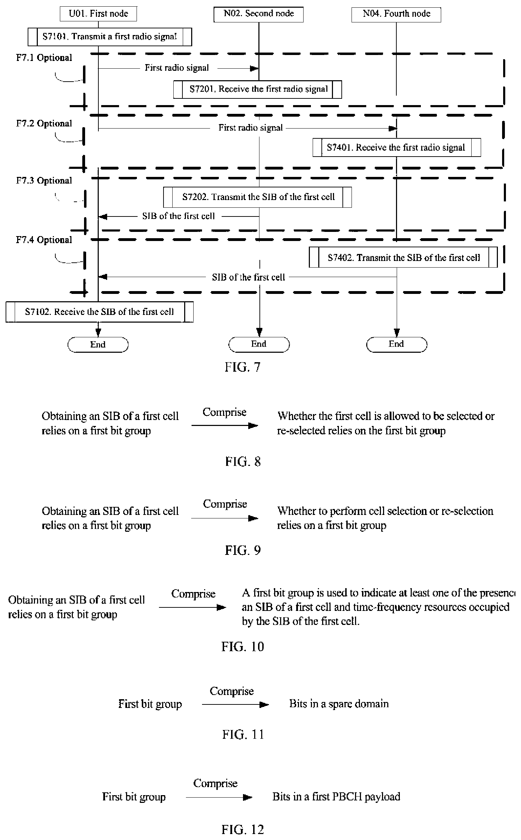

Embodiment 7 illustrates a flowchart of radio signal transmission according to another embodiment of the present application, as shown in FIG. 7. It should be particularly noted that the order in this example does not limit the signal transmission order and implementation order in the present application.

For **a first node U01,** in step S7101, a first radio signal is transmitted in a first time-frequency resource block; and in step S7102, an SIB of a first cell is obtained, wherein the SIB of the first cell comprises at least an SIB1.

For **a second node N02,** in step S7201, the first radio signal is received; and in step S7202, the SIB of the first cell is transmitted.

For **a fourth node N04,** in step S7401, the first radio signal is received; and in step S7402, the SIB of the first cell is transmitted.

In Embodiment 7, the first radio signal is used to request the transmission of the SIB of the first cell.

As one embodiment, only one of a dotted block F7.1 and a dotted block F7.2 exists.

As one embodiment, only one of a dotted block F7.3 and a dotted block F7.4 exists.

As one embodiment, a recipient of the first radio signal is the second node N02, and a sender of the SIB of the first cell is the second node N02.

As one embodiment, the recipient of the first radio signal is the fourth node N04, and the sender of the SIB of the first cell is the fourth node N04.

As one embodiment, the recipient of the first radio signal is the second node N02, and the sender of the SIB of the first cell is the fourth node N04.

As one embodiment, the recipient of the first radio signal is the fourth node N04, and the sender of the SIB of the first cell is the second node N02.

As one embodiment, in response to the second node N02 receiving the first radio signal, the second node N02 transmits the SIB of the first cell.

As one embodiment, in response to the fourth node N04 receiving the first radio signal, the fourth node N04 transmits the SIB of the first cell.

As one embodiment, in response to the fourth node N04 receiving the first radio signal, the second node N02 transmits the SIB of the first cell.

As one sub-embodiment of this embodiment, the fourth N04 indicates that the second node N02 transmits the SIB of the first cell.

As one embodiment, in response to the second node N02 receiving the first radio signal, the fourth node N04 transmits the SIB of the first cell.

As one sub-embodiment of this embodiment, a second node indicates that the fourth node N04 transmits the SIB of the first cell.

As one sub-embodiment of this embodiment, before the fourth node N04 transmits the SIB of the first cell, the second node N02 transmits the SIB of the first cell to the fourth node N04.

As one embodiment, if first broadcast information does not indicate configuration information of a PDCCH used to obtain the SIB of the first cell, the SIB of the first cell is obtained at least after the first radio signal is transmitted.

As one embodiment, in response to receiving the first broadcast information on a PBCH on the first cell, the first radio signal is transmitted.

As one embodiment, the first time-frequency resource block is configured at least before the first radio signal is transmitted.

As one embodiment, the first time-frequency resource block is indicated at least before the first radio signal is transmitted.

As one embodiment, the first time-frequency resource block is a physical layer resource.

As one embodiment, the first time-frequency resource block is configured for a WUS.

As one embodiment, the first time-frequency resource block is configured for a PUCCH.

As one embodiment, the first time-frequency resource block is one PRACH resource.

As one embodiment, the first time-frequency resource block is one PUCCH resource.

As one embodiment, the first time-frequency resource block is Cell Specific.

As one embodiment, the first time-frequency resource block is UE Specific.

As one embodiment, the first time-frequency resource block is configured for the first cell.

As one embodiment, the first time-frequency resource block is configured for one BWP (Bandwidth Part) of the first cell.

As one embodiment, the first time-frequency resource block is configured for one uplink (UL) carrier of the first cell.

As one embodiment, the first time-frequency resource block is configured for a sidelink (SL) carrier.

As one embodiment, the first time-frequency resource block is configured for the second cell.

As one embodiment, the first time-frequency resource block is configured for one BWP of the second cell.

As one embodiment, the first time-frequency resource block is configured for one uplink carrier of the second cell.

As one embodiment, the first time-frequency resource block is a PUCCH resource.

As one embodiment, the first bit group is used to determine a first time-frequency resource block.

As one embodiment, the first bit group is used to obtain the first time-frequency resource block.

As one embodiment, the first bit group is used to determine the availability of the first time-frequency resource block.

As one embodiment, the first bit group is used to determine that the first radio signal is transmitted in the first time-frequency resource block.

As one embodiment, the first bit group is used to configure the first time-frequency resource block.

As one embodiment, the first bit group indicates the first time-frequency resource block.

As one embodiment, the first bit group explicitly indicates the first time-frequency resource block.

As one embodiment, the first bit group implicitly indicates the first time-frequency resource block.

As one embodiment, the first bit group indicates an index of the first time-frequency resource block.

As one embodiment, the first bit group indicates a time domain position and a frequency domain position of the first time-frequency resource block.

As one embodiment, the first cell configures the first time-frequency resource block.

As one embodiment, the second cell configures the first time-frequency resource block.

As one embodiment, one RRC message received in the second cell is used to determine the first time-frequency resource block.

As one embodiment, one RRCReconfiguration message received in the second cell is used to determine the first time-frequency resource block.

As one embodiment, the first radio signal is one uplink signal.

As one embodiment, the first radio signal is one sidelink signal.

As one embodiment, the first radio signal is one physical layer signal.

As one embodiment, the first radio signal is one Wake-up indication.

As one embodiment, the first radio signal is one WUS (Wakeup Signal).

As one embodiment, the first radio signal occupies 1 bit.

As one embodiment, the first radio signal is one Preamble.

As one embodiment, the first radio signal is one MSGA (Message A).

As one embodiment, the first radio signal is one MSG3 (Message 3).

As one embodiment, the first radio signal comprises an RRC message.

As one embodiment, the first radio signal is a physical layer signal.

As one embodiment, the first radio signal is used to request the transmission of the SIB 1 of the first cell.

As one embodiment, the first radio signal is used to request the transmission of any SIB of the first cell.

As one embodiment, the first radio signal is used to request the transmission of a specified SIB of the first cell.

As one embodiment, the first radio signal is used to request the first cell to transmit the SIB of the first cell.

As one embodiment, the first radio signal is used to request the second cell to transmit the SIB of the first cell.

As one embodiment, the first radio signal indicates the requested SIB of the first cell.

As one embodiment, the first radio signal indicates an SIB1.

As one embodiment, the first radio signal indicates only one SIB.

As one embodiment, the first radio signal indicates at least one SIB.

As one embodiment, the first radio signal is associated with the SIB1.

As one embodiment, the first radio signal is associated with only one SIB.

As one embodiment, the first radio signal is associated with at least one SIB.

As one embodiment, the SIB of the first cell is received after the first radio signal is transmitted.

As one embodiment, the first radio signal is used to trigger the second node N02 to transmit the SIB of the first cell.

### Embodiment 8

FIG. 8 illustrates a schematic diagram of obtaining an SIB of a first cell relying on a first bit group according to one embodiment of the present application.

In Embodiment 8, the action of obtaining the SIB of the first cell relying on the first bit group comprises: whether the first cell is allowed to be selected or re-selected relies on the first bit group; the first cell is allowed to be selected or re-selected when the value of a first bit subgroup in the first bit group belongs to a first candidate set; the first cell is not allowed to be selected or re-selected when the value of the first bit subgroup in the first bit group does not belong to the first candidate set; and the first candidate set comprises at least one integer, and the first bit subgroup is a subset of the first bit group.

As one embodiment, the action of obtaining the SIB of the first cell relying on the first bit group can be replaced by: whether the first cell is allowed to be selected or re-selected relies on the first bit group.

As one embodiment, the action of obtaining the SIB of the first cell relying on the first bit group comprises: whether the first cell is considered barred relies on the first bit group.

As one embodiment, the action of obtaining the SIB of the first cell relying on the first bit group comprises: whether to apply first broadcast information relies on the first bit group.

As one embodiment, the value of the first bit subgroup in the first bit group being set as any one of elements in the first candidate set is used to determine that the first cell is allowed to be selected or re-selected.

As one embodiment, when the value of the first bit subgroup in the first bit group belongs to the first candidate set, the first cell is not considered barred; and the first cell being not considered barred is used to determine that the first cell is allowed to be selected or re-selected.

As one embodiment, when the value of the first bit subgroup in the first bit group belongs to the first candidate set, the first broadcast information is applied; and the action of applying the first broadcast information is used to determine that the first cell is allowed to be selected or re-selected.

As one embodiment, the value of the first bit subgroup in the first bit group being set as a value outside the first candidate set is used to determine that the first cell is not allowed to be selected or re-selected.

As one embodiment, when the value of the first bit subgroup in the first bit group does not belong to the first candidate set, the first cell is considered barred; and the first cell being considered barred is used to determine that the first cell is not allowed to be selected or re-selected.

As one embodiment, when the value of the first bit subgroup in the first bit group does not belong to the first candidate set, cell re-selection to other cells on the same frequency as the first cell is performed; and the action that cell re-selection to other cells on the same frequency as the first cell is performed is used to determine that the first cell is not allowed to be selected or re-selected.

As one embodiment, any one of elements in the first candidate set is one integer.

As one embodiment, any one of elements in the first candidate set is one non-negative integer.

As one embodiment, any one of elements in the first candidate set is one positive integer.

As one embodiment, the first bit subgroup comprises at least one bit in the first bit group.

As one embodiment, any bit in the first bit subgroup is one bit in the first bit group.

As one embodiment, the first candidate set is a first reference set; and the first bit subgroup in the first bit group comprises bits in a spare domain.

As one embodiment, the first candidate set is a second reference set; and the first bit subgroup in the first bit group comprises at least some bits in an ssb-SubcarrierOffset domain.

As one embodiment, the first candidate set is a third reference set; and the first bit subgroup in the first bit group comprises at least some bits in a pdcch-ConfigSIB1 domain.

As one embodiment, the first candidate set is a fourth reference set; and the first bit subgroup in the first bit group comprises bits in a first PBCH payload.

As one embodiment, the first candidate set comprises at least one of the first reference set or the second reference set or the third reference set or the fourth reference set; and the first bit group comprises at least one of bits in the spare domain or at least some bits in the ssb-SubcarrierOffset domain or at least some bits in the pdcch-ConfigSIB1 domain or bits in the first PBCH payload.

As one embodiment, the first bit group comprises at least one bit subgroup, and the first bit subgroup is one bit subgroup in the at least one bit subgroup.

As one sub-embodiment of this embodiment, the at least one bit subgroup is one bit subgroup; and the first bit subgroup is the first bit group.

As one sub-embodiment of this embodiment, the at least one bit subgroup is a plurality of bit subgroups; and the first bit subgroup is one bit subgroup of the plurality of bit subgroups.

As one embodiment, the value of the first bit subgroup in the first bit group in the first broadcast information belongs to the first candidate set.

As one embodiment, the value of the first bit subgroup in the first bit group in second broadcast information does not belong to the first candidate set.

### Embodiment 9

FIG. 9 illustrates a schematic diagram of obtaining an SIB of a first cell relying on a first bit group according to still another embodiment of the present application.

In Embodiment 9, the action of obtaining the SIB of the first cell relying on the first bit group comprises: whether to perform cell selection or re-selection relies on the first bit group; first broadcast information is applied when the value of a first bit subgroup in the first bit group belongs to a first candidate set; the cell selection or re-selection is performed when the value of the first bit subgroup in the first bit group does not belong to the first candidate set; the first candidate set comprises at least one integer, and the first bit subgroup is a subset of the first bit group; and the action of applying the first broadcast information is used to determine the obtaining of the SIB of the first cell.

As one embodiment, the first candidate set is a first reference set; and the first bit subgroup in the first bit group comprises bits in a spare domain.

As one embodiment, the first candidate set is a second reference set; and the first bit subgroup in the first bit group comprises at least some bits in an ssb-SubcarrierOffset domain.

As one embodiment, the first candidate set is a third reference set; and the first bit subgroup in the first bit group comprises at least some bits in a pdcch-ConfigSIB1 domain.

As one embodiment, the first candidate set is a fourth reference set; and the first bit subgroup in the first bit group comprises bits in a first PBCH payload.

As one embodiment, the first candidate set comprises at least one of the first reference set or the second reference set or the third reference set or the fourth reference set; and the first bit group comprises at least one of bits in the spare domain or at least some bits in the ssb-SubcarrierOffset domain or at least some bits in the pdcch-ConfigSIB1 domain or bits in the first PBCH payload.

As one embodiment, the action of performing cell selection or re-selection comprises: performing cell re-selection to other cells on the same frequency as the first cell.

As one embodiment, the action of performing cell selection or re-selection comprises: performing a cell selection process.

As one embodiment, the action of performing cell selection or re-selection comprises: performing a cell re-selection process.

As one embodiment, before the action of performing cell selection or re-selection, the first cell is considered barred.

As one embodiment, the value of the first bit subgroup in the first bit group in the first broadcast information belongs to the first candidate set.

As one embodiment, the value of the first bit subgroup in the first bit group in second broadcast information does not belong to the first candidate set.

### Embodiment 10

FIG. 10 illustrates a schematic diagram of obtaining an SIB of a first cell relying on a first bit group according to another embodiment of the present application.

In Embodiment 10, the action of obtaining the SIB of the first cell relying on the first bit group comprises: the first bit group is used to indicate at least one of the presence of the SIB of the first cell and time-frequency resources occupied by the SIB of the first cell.

As one embodiment, the first bit group indicating the presence of the SIB of the first cell is used to determine the obtaining of the SIB of the first cell.

As one embodiment, the first bit group indicating the time-frequency resources occupied by the SIB of the first cell is used to determine the obtaining of the SIB of the first cell.

As one embodiment, the first bit group indicating the presence of the SIB of the first cell and the time-frequency resources occupied by the SIB of the first cell is used to determine the obtaining of the SIB of the first cell.

As one embodiment, the action of obtaining the SIB of the first cell relying on the first bit group comprises: the first bit group is used to indicate the presence of the SIB of the first cell.

As one embodiment, the action of obtaining the SIB of the first cell relying on the first bit group comprises: the first bit group is used to indicate the time-frequency resources occupied by the SIB of the first cell.

As one embodiment, the action of obtaining the SIB of the first cell relying on the first bit group comprises: the first bit group is used to indicate the presence of the SIB of the first cell, and the first bit group is used to indicate the time-frequency resources occupied by the SIB of the first cell.

As one embodiment, the first bit group indicating the time-frequency resources occupied by the SIB of the first cell is used to determine that the first bit group indicates the presence of the SIB of the first cell.

As one embodiment, at least one bit in the first bit group other than the bits indicating the time-frequency resources occupied by the SIB of the first cell indicates the presence of the SIB of the first cell.

As one embodiment, the presence of the SIB in the first cell comprises: transmitting an SIB1 on the first cell at least once within each modification period.

As one embodiment, the modification period is an SIB1 modification period.

As one embodiment, the modification period is configurable.

As one embodiment, the length of the modification period is not less than 10 milliseconds.

As one embodiment, the presence of the SIB of the first cell comprises: a first node can trigger the transmission of the SIB of the first cell.

As one embodiment, the presence of the SIB of the first cell comprises: the first node can trigger the transmission of at least an SIB1 of the first cell.

As one embodiment, the presence of the SIB of the first cell comprises: the first node can trigger the transmission of at least an SIB1 on the first cell.

As one embodiment, the presence of the SIB of the first cell comprises: the first node can trigger the transmission of at least an SIB1 of the first cell on a second cell.

### Embodiment 11

Embodiment 11 illustrates a schematic diagram of a first bit group comprising bits in a spare domain according to one embodiment of the present application, as shown in FIG. 11.

In Embodiment 11, the first bit group comprises bits in the spare domain.

As one embodiment, the first bit group comprises each bit in the spare domain.

As one embodiment, the first bit group comprises at least 1 bit in the spare domain.

As one embodiment, the first bit group comprises only bits in the spare domain.

As one embodiment, the first bit group comprises at least one bit other than the bits in the spare domain.

As one embodiment, the first bit group is a bit in the spare domain.

As one embodiment, the first bit group is the bit corresponding to the spare domain.

As one embodiment, the spare domain belongs to an MIB message in first broadcast information.

As one embodiment, the spare domain occupies 1 bit.

As one embodiment, the spare domain is used to indicate whether the UE supporting network energy saving is allowed to access a first cell.

As one embodiment, the value of the spare domain is used to indicate whether the UE supporting network energy saving is allowed to access the first cell.

As one embodiment, the spare domain in the first bit group in the first broadcast information is set as any one of elements in a first reference set.

As one embodiment, if the spare domain is set as any one of elements in the first reference set, the spare domain indicates that the UE supporting network energy saving is allowed to access the first cell; and if the spare domain is set as a value outside the first reference set, the spare domain is reserved.

As one embodiment, if the spare domain is set as any one of elements in the first reference set, the spare domain indicates that the UE supporting network energy saving is allowed to access the first cell; and if the spare domain is set as the value outside the first reference set, the spare domain does not indicate that the UE supporting network energy saving is allowed to access the first cell.

As one embodiment, the first reference set comprises at least one integer.

As one embodiment, the first reference set comprises only one integer.

As one embodiment, the first reference set comprises a plurality of integers.

As one embodiment, any one of elements in the first reference set is one non-negative integer.

As one embodiment, any one of elements in the first reference set is one positive integer.

As one embodiment, the first reference set is 1.

As one embodiment, the first reference set is 0.

As one embodiment, the spare domain being set as any one of elements in the first reference set is used to determine the obtaining of an SIB of the first cell.

As one embodiment, the spare domain being set as the value outside the first reference set is not used to determine the obtaining of the SIB of the first cell.

As one embodiment, the spare domain being set as the value outside the first reference set is used to determine not to obtain the SIB of the first cell.

As one embodiment, in response to at least the spare domain being set as any one of elements in the first reference set, the SIB of the first cell is obtained.

As one embodiment, the SIB of the first cell is obtained only when the spare domain is set as any one of elements in the first reference set.

As one embodiment, a first bit subgroup in the first bit group comprises bits in the spare domain; and a first candidate set is the first reference set.

As one embodiment, the first bit subgroup in the first bit group consists of the spare domain; and the first candidate set is the first reference set.

### Embodiment 12

Embodiment 12 illustrates a schematic diagram of a first bit group comprising bits in a first PBCH payload according to one embodiment of the present application, as shown in FIG. 12.

In Embodiment 12, the first bit group comprises bits in the first PBCH payload; the bits in the first PBCH payload are generated at a physical layer; and the first PBCH payload is not used for an ssb-SubcarrierOffset domain.

As one embodiment, L̅ₘₐₓ is not greater than 16.

As one embodiment, L̅ₘₐₓ = 4.

As one embodiment, L̅ₘₐₓ = 8.

As one embodiment, L̅ₘₐₓ = 10.

As one embodiment, the definitions of L̅ₘₐₓ refer to 3GPP TS38.213.

As one embodiment, the bits in the first PBCH payload do not belong to an MIB message.

As one embodiment, the bits in the first PBCH payload do not carry an RRC message.

As one embodiment, the bits in the first PBCH payload are not mapped to a BCCH.

As one embodiment, the bits in the first PBCH payload are not used for any domain in the MIB message.

As one embodiment, the bits in the first PBCH payload are not used to interpret the MIB message.

As one embodiment, the first PBCH payload is not used for a systemFrameNumber domain.

As one embodiment, the first PBCH payload is at least one bit comprised in a̅₀, a̅₁, a̅₂, a̅₃, ... , a̅_{A̅-1}.

As one embodiment, the first PBCH payload comprises at least one bit of a̅_̅{̅A̅}̅, a̅_{A̅+1}, a̅_{A̅+2}, a̅_{A̅+3}, a̅_{A̅+4}, a̅_{A̅+5}, a̅_{A̅+6} and a̅_{A̅+7}.

As one embodiment, the first PBCH payload comprises at least one bit of a̅_{A̅+4}, a̅_{A̅+5}, a̅_{A̅+6} and a̅_{A̅+7}.

As one embodiment, the first PBCH payload comprises at least one bit of a̅_{A̅+5}, a̅_{A̅+6}, and a̅_{A̅+7}.

As one embodiment, the first PBCH payload comprises 1 bit.

As one embodiment, the first PBCH payload comprises 2 bits.

As one embodiment, the first PBCH payload comprises 3 bits.

As one embodiment, the first PBCH payload is a̅_{A̅+5}.

As one embodiment, the first PBCH payload is a̅_{A̅+6}.

As one embodiment, the first PBCH payload is a̅_{A̅+7}.

As one embodiment, the first PBCH payload is a̅_{A̅+5} and a̅_{A̅+6}.

As one embodiment, the first PBCH payload is a̅_{A̅+6} and a̅_{A̅+7}.

As one embodiment, the first PBCH payload is a̅_{A̅+5}, a̅_{A̅+6}and a̅_{A̅+7}.

As one embodiment, the first PBCH payload in the first bit group in first broadcast information is set as any one of elements in a fourth reference set.

As one embodiment, if the first PBCH payload is set as any one of elements in the fourth reference set, the first PBCH payload indicates that the UE supporting network energy saving is allowed to access a first cell; and if the first PBCH payload is set as a value outside the fourth reference set, the first PBCH payload is reserved.

As one embodiment, if the first PBCH payload is set as any one of elements in the fourth reference set, the first PBCH payload indicates that the UE supporting network energy saving is allowed to access the first cell; and if the first PBCH payload is set as the value outside the fourth reference set, the first PBCH payload does not indicate that the UE supporting network energy saving is allowed to access the first cell.

As one embodiment, the fourth reference set comprises at least one integer.

As one embodiment, the fourth reference set comprises only one integer.

As one embodiment, the fourth reference set comprises a plurality of integers.

As one embodiment, any one of elements in the fourth reference set is one non-negative integer.

As one embodiment, any one of elements in the fourth reference set is one positive integer.

As one embodiment, the fourth reference set is 1.

As one embodiment, the fourth reference set is 0.

As one embodiment, the fourth reference set comprises 11, and the fourth reference set does not comprise 00.

As one embodiment, the fourth reference set comprises 10, and the fourth reference set does not comprise 00.

As one embodiment, the first PBCH payload being set as any one of elements in the fourth reference set is used to determine the obtaining of an SIB of the first cell.

As one embodiment, the first PBCH payload being set as the value outside the fourth reference set is not used to determine the obtaining of the SIB of the first cell.

As one embodiment, the first PBCH payload being set as the value outside the fourth reference set is used to determine not to obtain the SIB of the first cell.

As one embodiment, in response to at least the first PBCH payload being set as any one of elements in the fourth reference set, the SIB of the first cell is obtained.

As one embodiment, the SIB of the first cell is obtained only when the first PBCH payload is set as any one of elements in the fourth reference set.

As one embodiment, a first bit subgroup in the first bit group comprises bits in the first PBCH payload; and a first candidate set is the fourth reference set.

As one embodiment, the first bit subgroup in the first bit group consists of bits in the first PBCH payload; and the first candidate set is the fourth reference set.

### Embodiment 13

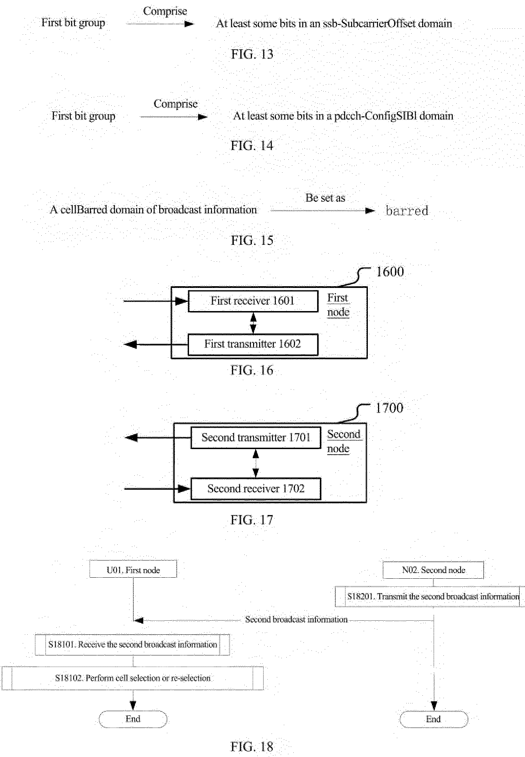

Embodiment 13 illustrates a schematic diagram of a first bit group comprising at least some bits in an ssb-SubcarrierOffset domain according to one embodiment of the present application, as shown in FIG. 13.

In Embodiment 13, the first bit group comprises at least some bits in the ssb-SubcarrierOffset domain.

As one embodiment, the first bit group comprises all bits in the ssb-SubcarrierOffset domain.

As one embodiment, the first bit group comprises some bits in the ssb-SubcarrierOffset domain.

As one embodiment, the first bit group comprises only bits in the ssb-SubcarrierOffset domain.

As one embodiment, the first bit group comprises at least one bit other than bits in the ssb-SubcarrierOffset domain.

As one embodiment, the ssb-SubcarrierOffset domain corresponds to k_{SSB}.

As one embodiment, the value of the ssb-SubcarrierOffset domain refers to the value of k_{SSB}.

As one embodiment, the ssb-SubcarrierOffset domain comprises 4 bits in an MIB message in first broadcast information and 1 bit in a PBCH payload generated at a physical layer in the first broadcast information.

As one embodiment, the ssb-SubcarrierOffset domain is one domain in the MIB message in the first broadcast information.

As one embodiment, the ssb-SubcarrierOffset domain comprises one domain in the MIB message in the first broadcast information and a̅_{A̅+5} of the PBCH payload generated at the physical layer in the first broadcast information.

As one embodiment, the ssb-SubcarrierOffset domain occupies 4 bits.

As one embodiment, the ssb-SubcarrierOffset domain occupies 5 bits.

As one embodiment, the ssb-SubcarrierOffset domain in the first bit group in the first broadcast information is set as any one of elements in a second reference set.

As one embodiment, if the ssb-SubcarrierOffset domain is set as any one of elements in the second reference set, the ssb-SubcarrierOffset domain indicates that the UE supporting network energy saving is allowed to access a first cell; and if the ssb-SubcarrierOffset domain is set as a value outside the second reference set, the ssb-SubcarrierOffset domain is reserved.

As one embodiment, if the ssb-SubcarrierOffset domain is set as any one of elements in the second reference set, the ssb-SubcarrierOffset domain indicates that the UE supporting network energy saving is allowed to access the first cell; and if the ssb-SubcarrierOffset domain is set as the value outside the second reference set, the ssb-SubcarrierOffset domain does not indicate that the UE supporting network energy saving is allowed to access the first cell.

As one embodiment, the second reference set comprises at least one integer.

As one embodiment, the second reference set comprises only one integer.

As one embodiment, the second reference set comprises a plurality of integers.

As one embodiment, any one of elements in the second reference set is one non-negative integer.

As one embodiment, any one of elements in the second reference set is one positive integer.

As one embodiment, for FR1 (Frequency range 1), the second reference set consists of all integers not less than 0 and not greater than 23.

As one embodiment, for FR2 (Frequency range 2), the second reference set consists of all integers not less than 0 and not greater than 11.

As one embodiment, for FR1, the second reference set consists of 30.

As one embodiment, for FR1, the second reference set consists of all integers not less than 0 and not greater than 23 as well as 30.

As one embodiment, for FR2, the second reference set consists of 14.

As one embodiment, for FR2, the second reference set consists of all integers not less than 0 and not greater than 11 as well as 14.

As one embodiment, the first broadcast information indicates configuration information of a PDCCH used to obtain an SIB of the first cell; and the second reference set comprises all integers not less than 0 and not greater than 23.

As one embodiment, the first broadcast information indicates the configuration information of the PDCCH used to obtain the SIB of the first cell.

As one embodiment, the first broadcast information does not indicate the configuration information of the PDCCH used to obtain the SIB of the first cell.

As one embodiment, the configuration information of the PDCCH used to obtain the SIB of the first cell comprises a Type0-PDCCH CSS (Common search space) set.

As one embodiment, the configuration information of the PDCCH used to obtain the SIB of the first cell comprises a CORESET (Control resource set) #0.

As one embodiment, the configuration information of the PDCCH used to obtain the SIB of the first cell comprises a SearchSpace#0.

As one embodiment, the configuration information of the PDCCH used to obtain the SIB of the first cell comprises a CORESET#0 of an initial BWP.

As one embodiment, the configuration information of the PDCCH used to obtain the SIB of the first cell comprises the SearchSpace#0 of the initial BWP.

As one embodiment, for FR1, if the ssb-SubcarrierOffset domain in the first bit group in the first broadcast information is set as an integer not less than 0 and not greater than 23, the first broadcast information indicates the configuration information of the PDCCH used to obtain the SIB of the first cell; if the ssb-SubcarrierOffset domain in the first bit group in the first broadcast information is set as 30, the first broadcast information does not indicate the configuration information of the PDCCH used to obtain the SIB of the first cell; and the second reference set consists of all integers not less than 0 and not greater than 23 as well as 30.

As one embodiment, for FR2, if the ssb-SubcarrierOffset domain in the first bit group in the first broadcast information is set as an integer not less than 0 and not greater than 11, the first broadcast information indicates the configuration information of the PDCCH used to obtain the SIB of the first cell; if the ssb-SubcarrierOffset domain in the first bit group in the first broadcast information is set as 14, the first broadcast information does not indicate the configuration information of the PDCCH used to obtain the SIB of the first cell; and the second reference set consists of all integers not less than 0 and not greater than 11 as well as 14.

As one embodiment, the ssb-SubcarrierOffset domain being set as any one of elements in the second reference set is used to determine the obtaining of the SIB of the first cell.

As one embodiment, the ssb-SubcarrierOffset domain being set as the value outside the second reference set is not used to determine the obtaining of the SIB of the first cell.

As one embodiment, the ssb-SubcarrierOffset domain being set as the value outside the second reference set is used to determine not to obtain the SIB of the first cell.

As one embodiment, in response to at least the ssb-SubcarrierOffset domain being set as any one of elements in the second reference set, the SIB of the first cell is obtained.

As one embodiment, the SIB of the first cell is obtained only when the ssb-SubcarrierOffset domain is set as any one of elements in the second reference set.

As one embodiment, a first bit subgroup in the first bit group comprises at least some bits in the ssb-SubcarrierOffset domain; and a second candidate set is a first reference set.

As one embodiment, the first bit subgroup in the first bit group consists of at least some bits in the ssb-SubcarrierOffset domain; and the second candidate set is the first reference set.

As one embodiment, a first node and the first cell operate in FR1.

As one embodiment, the first node and the first cell operate in FR2.

### Embodiment 14

Embodiment 14 illustrates a schematic diagram of a first bit group comprising at least some bits in a pdcch-ConfigSIB1 domain according to one embodiment of the present application, as shown in FIG. 14.

In Embodiment 14, the first bit group comprises at least some bits in the pdcch-ConfigSIB1 domain.

As one embodiment, the first bit group comprises at least some bits in an ssb-SubcarrierOffset domain, and the first bit group comprises at least some bits in the pdcch-ConfigSIB1 domain.

As one embodiment, the first bit group comprises the ssb-SubcarrierOffset domain, and the first bit group comprises the pdcch-ConfigSIB1 domain.

As one embodiment, the first bit group comprises some bits in the pdcch-ConfigSIB1 domain.

As one embodiment, the first bit group comprises all bits in the pdcch-ConfigSIB1 domain.

As one embodiment, the first bit group comprises only bits in the pdcch-ConfigSIB1 domain.

As one embodiment, the first bit group comprises at least one bit other than bits in the pdcch-ConfigSIB1 domain.

As one embodiment, the pdcch-ConfigSIB1 domain is one domain in an MIB message in first broadcast information.

As one embodiment, the pdcch-ConfigSIB1 domain comprises a SearchSpaceZero IE (Information Element) and a ControlResourceSetZero IE.

As one embodiment, the pdcch-ConfigSIB1 domain is used to configure a CORESET#0.

As one embodiment, the pdcch-ConfigSIB1 domain is used to configure the CORESET#0 on an initial BWP of a first cell.

As one embodiment, the pdcch-ConfigSIB1 domain is used to configure the CORESET#0 on the initial BWP of a second cell.

As one embodiment, the pdcch-ConfigSIB1 domain is used to configure a SearchSpace#0.

As one embodiment, the pdcch-ConfigSIB1 domain is used to configure the SearchSpace#0 on the initial BWP of the first cell.

As one embodiment, the pdcch-ConfigSIB1 domain is used to configure the SearchSpace#0 on the initial BWP of the second cell.

As one embodiment, the ssb-SubcarrierOffset domain comprises one domain in the MIB message in the first broadcast information and a̅_{A̅+5} of a PBCH payload generated at a physical layer in the first broadcast information.

As one embodiment, the first bit group consists of the SearchSpaceZero IE in the pdcch-ConfigSIB1 domain.

As one embodiment, the first bit group consists of the ControlResourceSetZero IE in the pdcch-ConfigSIB1 domain.

As one embodiment, the pdcch-ConfigSIB1 domain in the first bit group in the first broadcast information is set as any one of elements in a third reference set.

As one embodiment, for FR1, the ssb-SubcarrierOffset domain in the first bit group in the first broadcast information is set as 30, and the pdcch-ConfigSIB1 domain in the first bit group in the first broadcast information is set as any one of elements in the third reference set.

As one embodiment, for FR2, the ssb-SubcarrierOffset domain in the first bit group in the first broadcast information is set as 14, and the pdcch-ConfigSIB1 domain in the first bit group in the first broadcast information is set as any one of elements in the third reference set.

As one embodiment, if the pdcch-ConfigSIB1 domain is set as any one of elements in the third reference set, the pdcch-ConfigSIB1 domain indicates that the UE supporting network energy saving is allowed to access the first cell; and if the pdcch-ConfigSIB1 domain is set as a value outside the third reference set, the pdcch-ConfigSIB1 domain is reserved.

As one embodiment, if the pdcch-ConfigSIB1 domain is set as any one of elements in the third reference set, the pdcch-ConfigSIB1 domain indicates that the UE supporting network energy saving is allowed to access the first cell; and if the pdcch-ConfigSIB1 domain is set as the value outside the third reference set, the pdcch-ConfigSIB1 domain does not indicate that the UE supporting network energy saving is allowed to access the first cell.

As one embodiment, if the SearchSpaceZero IE is set as any one of elements in the third reference set, the SearchSpaceZero IE indicates that the UE supporting network energy saving is allowed to access the first cell; and if the SearchSpaceZero IE is set as the value outside the third reference set, the SearchSpaceZero IE is reserved.

As one embodiment, if the SearchSpaceZero IE is set as any one of elements in the third reference set, the SearchSpaceZero IE indicates that the UE supporting network energy saving is allowed to access the first cell; and if the SearchSpaceZero IE is set as the value outside the third reference set, the SearchSpaceZero IE does not indicate that the UE supporting network energy saving is allowed to access the first cell.

As one embodiment, if the ControlResourceSetZero IE is set as any one of elements in the third reference set, the ControlResourceSetZero IE indicates that the UE supporting network energy saving is allowed to access the first cell; and if the ControlResourceSetZero IE is set as the value outside the third reference set, the ControlResourceSetZero IE is reserved.

As one embodiment, if the ControlResourceSetZero IE is set as any one of elements in the third reference set, the ControlResourceSetZero IE indicates that the UE supporting network energy saving is allowed to access the first cell; and if the ControlResourceSetZero IE is set as the value outside the third reference set, the ControlResourceSetZero IE does not indicate that the UE supporting network energy saving is allowed to access the first cell.

As one embodiment, the third reference set comprises at least one integer.

As one embodiment, the third reference set comprises only one integer.

As one embodiment, the third reference set comprises a plurality of integers.

As one embodiment, any one of elements in the third reference set is one non-negative integer.

As one embodiment, any one of elements in the third reference set is one positive integer.

As one embodiment, the third reference set is one integer not less than 0 and not greater than 255.

As one embodiment, the third reference set comprises at least one integer not less than 0 and not greater than 255.

As one embodiment, the third reference set consists of 0.

As one embodiment, the third reference set consists of 1.

As one embodiment, the third reference set consists of 255.

As one embodiment, the pdcch-ConfigSIB1domain being set as any one of elements in the third reference set is used to determine the obtaining of the SIB of the first cell.

As one embodiment, the pdcch-ConfigSIB1 domain being set as the value outside the third reference set is not used to determine the obtaining of the SIB of the first cell.

As one embodiment, the pdcch-ConfigSIB1 domain being set as the value outside the third reference set is used to determine not to obtain the SIB of the first cell.

As one embodiment, in response to that at least the pdcch-ConfigSIB1 domain is set as any one of elements in the third reference set, the SIB of the first cell is obtained.

As one embodiment, only when the pdcch-ConfigSIB1 domain is set as any one of elements in the third reference set, the SIB of the first cell is obtained.

As one embodiment, a first bit subgroup in the first bit group consists of SearchSpaceZero IEs in the pdcch-ConfigSIB1 domain.

As one embodiment, the first bit subgroup in the first bit group consists of ControlResourceSetZero IEs in the pdcch-ConfigSIB1 domain.

As one embodiment, the first bit subgroup in the first bit group comprises at least some bits in the pdcch-ConfigSIB1 domain; and a third candidate set is a first reference set.

As one embodiment, the first bit subgroup in the first bit group consists of at least some bits in the pdcch-ConfigSIB1 domain; and the third candidate set is the first reference set.

### Embodiment 15

Embodiment 15 illustrates a schematic diagram of a cellBarred domain of first broadcast information being set as barred according to one embodiment of the present application, as shown in FIG. 15.

In Embodiment 15, the cellBarred domain of the first broadcast information is set as barred.

As one embodiment, the phrase that the cellBarred domain of the first broadcast information is set as barred comprises: the value of the cellBarred domain of the first broadcast information is barred.

As one embodiment, the phrase that the cellBarred domain of the first broadcast information is set as barred comprises: the cellBarred domain of the first broadcast information is set as the former of barred and notBarred.

As one embodiment, the cellBarred domain of the first broadcast information belongs to an MIB message in the first broadcast information.

As one embodiment, the cellBarred domain of the first broadcast information belongs to a PBCH payload generated at a physical layer.

As one embodiment, when the cellBarred domain of the first broadcast information is set as barred, the action of obtaining an SIB of a first cell relies on a first bit group.

As one embodiment, if the cellBarred domain of the first broadcast information is set as barred, the action of obtaining the SIB of the first cell relies on the first bit group.

As one embodiment, the cellBarred domain of the first broadcast information being set as barred is used to determine that the action of obtaining the SIB of the first cell relies on the first bit group.

As one embodiment, any bit comprised in the first bit group does not belong to the cellBarred domain.

As one embodiment, any bit comprised in the first bit group does not belong to the cellBarred domain and does not belong to an intraFreqReselection domain.

As one embodiment, if the cellBarred domain of the first broadcast information is set as notBarred, the first broadcast information is applied.

### Embodiment 16

Embodiment 16 illustrates a structural block diagram of a processing apparatus in a first node according to one embodiment of the present application; as shown in FIG. 16. In FIG. 16, a processing apparatus 1600 in the first node comprises a first receiver 1601 and a first transmitter 1602.

The first receiver 1601 receives first broadcast information on a PBCH of a first cell, wherein the first broadcast information comprises a first bit group, and at least one bit comprised in the first bit group does not belong to a cellBarred domain and does not belong to an intraFreqReselection domain; and obtains an SIB of the first cell, wherein the SIB of the first cell comprises at least an SIB1.

In Embodiment 16, the action of obtaining the SIB of the first cell relies on the first bit group; the first broadcast information comprises at least the cellBarred domain in the cellBarred domain and the intraFreqReselection domain; the first node is not RedCap user equipment; and the first node is not capable of supporting an NTN or access of the first node is not for the NTN.

As one embodiment, the first transmitter 1602 transmits a first radio signal in a first time-frequency resource block, wherein the first radio signal is used to request the transmission of the SIB of the first cell.

As one embodiment, the first bit group is used to determine the first time-frequency resource block.

As one embodiment, the action of obtaining the SIB of the first cell relying on the first bit group comprises: whether the first cell is allowed to be selected or re-selected relies on the first bit group; the first cell is allowed to be selected or re-selected when the value of a first bit subgroup in the first bit group belongs to a first candidate set; the first cell is not allowed to be selected or re-selected when the value of the first bit subgroup in the first bit group does not belong to the first candidate set; and the first candidate set comprises at least one integer, and the first bit subgroup is a subset of the first bit group.

As one embodiment, the action of obtaining the SIB of the first cell relying on the first bit group comprises: whether to perform cell selection or re-selection relies on the first bit group; the cell selection or re-selection is performed when the value of the first bit subgroup in the first bit group does not belong to the first candidate set; the cell selection or re-selection is not performed when the value of the first bit subgroup in the first bit group belongs to the first candidate set; and the first candidate set comprises at least one integer, and the first bit subgroup is a subset of the first bit group.

As one embodiment, the action of obtaining the SIB of the first cell relying on the first bit group comprises: the first bit group is used to indicate at least one of the presence of the SIB of the first cell and time-frequency resources occupied by the SIB of the first cell.

As one embodiment, the first bit group comprises bits in a spare domain.

As one embodiment, the first bit group comprises bits in a first PBCH payload; the bits in the first PBCH payload are generated at a physical layer; and the first PBCH payload is not used for an ssb-SubcarrierOffset domain.

As one embodiment, the first bit group comprises at least some bits in the ssb-SubcarrierOffset domain.

As one embodiment, the first bit group comprises at least some bits in a pdcch-ConfigSIB1 domain.

As one embodiment, the cellBarred domain of the first broadcast information is set as barred.

As one embodiment, the first node at least supports network energy saving.

As one embodiment, the first bit group comprises bits in the spare domain, and the first bit group comprises at least some bits in the ssb-SubcarrierOffset domain.

As one embodiment, the first bit group comprises bits in the first PBCH payload, and the first bit group comprises at least some bits in the ssb-SubcarrierOffset domain.

As one embodiment, the first bit group comprises at least some bits in the ssb-SubcarrierOffset domain, and the first bit group comprises at least some bits in the pdcch-ConfigSIB1 domain.

As one embodiment, the first bit group comprises at least one of bits in the spare domain or at least some bits in the ssb-SubcarrierOffset domain or at least some bits in the pdcch-ConfigSIB1 domain or bits in the first PBCH payload.

As one embodiment, the first receiver 1601 receives the first broadcast information on the PBCH of the first cell, wherein the first broadcast information comprises the first bit group, and at least one bit comprised in the first bit group does not belong to the cellBarred domain and does not belong to the intraFreqReselection domain; and obtains the SIB of the first cell, wherein the SIB of the first cell comprises at least the SIB1, and wherein the cellBarred domain of the first broadcast information is set as barred; the action of obtaining the SIB of the first cell relies on the first bit group; the first broadcast information comprises at least the cellBarred domain in the cellBarred domain and the intraFreqReselection domain; the first node is not RedCap user equipment; and the first node is not capable of supporting an NTN or access of the first node is not for the NTN.

As one embodiment, the first receiver 1601 receives the first broadcast information on the PBCH of the first cell, wherein the first broadcast information comprises the first bit group, at least one bit comprised in the first bit group does not belong to the cellBarred domain and does not belong to the intraFreqReselection domain; and obtains the SIB of the first cell, wherein the SIB of the first cell comprises at least the SIB1, and wherein the cellBarred domain of the first broadcast information is set as barred; the first node at least supports network energy saving; the action of obtaining the SIB of the first cell relies on the first bit group; the first broadcast information comprises at least the cellBarred domain in the cellBarred domain and the intraFreqReselection domain; the first node is not RedCap user equipment; and the first node is not capable of supporting an NTN or access of the first node is not for the NTN.

As one embodiment, the first receiver 1601 comprises an antenna 452, a receiving device 454, a multi-antenna receiving processor 458, a receiving processor 456, a controller/processor 459, a memory 460, and a data source 467 in FIG. 4 of the present application.

As one embodiment, the first receiver 1601 comprises the antenna 452, the receiving device 454, the multi-antenna receiving processor 458, and the receiving processor 456 in FIG. 4 of the present application.

As one embodiment, the first receiver 1601 comprises the antenna 452, the receiving device 454, and the receiving processor 456 in FIG. 4 of the present application.

As one embodiment, the first transmitter 1602 comprises the antenna 452, a transmitting device 454, a multi-antenna transmitting processor 457, a transmitting processor 468, the controller/processor 459, the memory 460, and the data source 467 in FIG. 4 of the present application.

As one embodiment, the first transmitter 1602 comprises the antenna 452, the transmitting device 454, the multi-antenna transmitting processor 457, and the transmitting processor 468 in FIG. 4 of the present application.

As one embodiment, the first transmitter 1602 comprises the antenna 452, the transmitting device 454, and the transmitting processor 468 in FIG. 4 of the present application.

### Embodiment 17

Embodiment 17 illustrates a structural block diagram of a processing apparatus in a second node according to one embodiment of the present application, as shown in FIG. 17. In FIG. 17, a processing apparatus 1700 in the second node comprises a second transmitter 1701 and a second receiver 1702.

The second transmitter 1701 transmits first broadcast information on a PBCH of a first cell, wherein the first broadcast information comprises a first bit group, and at least one bit comprised in the first bit group does not belong to a cellBarred domain and does not belong to an intraFreqReselection domain.

In Embodiment 17, the first bit group is used to indicate that a first node obtains an SIB of the first cell, and the SIB of the first cell comprises at least an SIB1; the first broadcast information comprises at least the cellBarred domain in the cellBarred domain and the intraFreqReselection domain; the first node is not RedCap user equipment; and the first node is not capable of supporting an NTN or access of the first node is not for the NTN.

As one embodiment, the second transmitter 1702 transmits the SIB of the first cell.

As one embodiment, the SIB of the first cell is transmitted by a fourth node in the present application.

As one embodiment, the second receiver 1702 receives a first radio signal, wherein the first radio signal is transmitted on a first time-frequency resource block; and the first radio signal is used to request the transmission of the SIB of the first cell.

As one embodiment, the first bit group is used to determine the first time-frequency resource block.

As one embodiment, the action of obtaining the SIB of the first cell relying on the first bit group comprises: whether the first cell is allowed to be selected or re-selected relies on the first bit group; the first cell is allowed to be selected or re-selected when the value of a first bit subgroup in the first bit group belongs to a first candidate set; the first cell is not allowed to be selected or re-selected when the value of the first bit subgroup in the first bit group does not belong to the first candidate set; and the first candidate set comprises at least one integer, and the first bit subgroup is a subset of the first bit group.

As one embodiment, the action of obtaining the SIB of the first cell relying on the first bit group comprises: whether to perform cell selection or re-selection relies on the first bit group; the cell selection or re-selection is performed when the value of the first bit subgroup in the first bit group does not belong to the first candidate set; the cell selection or re-selection is not performed when the value of the first bit subgroup in the first bit group belongs to the first candidate set; and the first candidate set comprises at least one integer, and the first bit subgroup is a subset of the first bit group.

As one embodiment, the action of obtaining the SIB of the first cell relying on the first bit group comprises: the first bit group is used to indicate at least one of the presence of the SIB of the first cell and the time-frequency resources occupied by the SIB of the first cell.

As one embodiment, the first bit group comprises bits in a spare domain.

As one embodiment, the first bit group comprises bits in a first PBCH payload; the bits in the first PBCH payload are generated at a physical layer; and the first PBCH payload is not used for an ssb-SubcarrierOffset domain.

As one embodiment, the first bit group comprises at least some bits in the ssb-SubcarrierOffset domain.

As one embodiment, the first bit group comprises at least some bits in a pdcch-ConfigSIB1 domain.

As one embodiment, the cellBarred domain of the first broadcast information is set as barred.

As one embodiment, the first node at least supports network energy saving.

As one embodiment, the second transmitter 1701 comprises an antenna 420, a transmitting device 418, a multi-antenna transmitting processor 471, a transmitting processor 416, a controller/processor 475, and a memory 476 in FIG. 4 of the present application.

As one embodiment, the second transmitter 1701 comprises the antenna 420, the transmitting device 418, the multi-antenna transmitting processor 471, and the transmitting processor 416 in FIG. 4 of the present application.

As one embodiment, the second transmitter 1701 comprises the antenna 420, the transmitting device 418, and the transmitting processor 416 in FIG. 4 of the present application.

As one embodiment, the second receiver 1702 comprises the antenna 420, a receiving device 418, a multi-antenna receiving processor 472, a receiving processor 470, the controller/processor 475, and the memory 476 in FIG. 4 of the present application.

As one embodiment, the second receiver 1702 comprises the antenna 420, the receiving device 418, the multi-antenna receiving processor 472, and the receiving processor 470 in FIG. 4 of the present application.

As one embodiment, the second receiver 1702 comprises the antenna 420, the receiving device 418, and the receiving processor 470 in FIG. 4 of the present application.

### Embodiment 18

Embodiment 18 illustrates a flowchart of radio signal transmission according to yet another embodiment of the present application, as shown in FIG. 18. It should be particularly noted that the order in this example does not limit the signal transmission order and implementation order in the present application.

For **a first node U01**, in step 18101, second broadcast information is received on a PBCH of a first cell, wherein the second broadcast information comprises a first bit group, and at least one bit comprised in the first bit group does not belong to a cellBarred domain and does not belong to an intraFreqReselection domain; and in step 18102, cell selection or re-selection is performed;
for **a second node U01**, in step 18201, the second broadcast information is transmitted.

In Embodiment 18, the action of performing cell selection or re-selection relies on the first bit group; the second broadcast information comprises at least the cellBarred domain in the cellBarred domain and the intraFreqReselection domain; the first node U01 is not RedCap user equipment; and the first node U01 is not capable of supporting an NTN or access of the first node U01 is not for the NTN.

As one embodiment, before receiving the second broadcast information, a first broadcast information is received.

As one embodiment, after receiving the second broadcast information, the first broadcast information is received.

As one embodiment, the first broadcast information and the second broadcast information are two different pieces of broadcast information of the first cell.

As one embodiment, the structure of the first broadcast information is the same as that of the second broadcast information.

As one embodiment, the structure of the first broadcast information is the same as that of the second broadcast information.

As one embodiment, within the time interval between the action of receiving the second broadcast information on the PBCH of the first cell and the action of performing cell selection or re-selection, the first node U01 does not obtain the SIB of the first cell.

As one embodiment, the value of the first bit group in the second broadcast information is different from the value of the first bit group in the first broadcast information.

As one embodiment, a spare domain in the first bit group in the second broadcast information is set as a value outside a first reference set.

As one embodiment, a first PBCH payload in the first bit group in the second broadcast information is set as the value outside a fourth reference set.

As one embodiment, an ssb-SubcarrierOffset domain in the first bit group in the second broadcast information is set as the value outside a second reference set.

As one embodiment, a pdcch-ConfigSIB 1 domain in the first bit group in the second broadcast information is set as the value outside a third reference set.

As one embodiment, the cellBarred domain in the second broadcast information is set as barred.

Those of ordinary skill in the art can understand that all or part of the steps in the above method may be completed by instructing relevant hardware through a program, and the program may be stored in a computer-readable storage medium, such as a read-only memory, a hard disk or an optical disk. Optionally, all or part of the steps in the above embodiments may also be implemented using one or more integrated circuits. Accordingly, each module unit in the above embodiments may be implemented in the form of hardware or in the form of a software function module, and the present application is not limited to any specific form of software and hardware combination. The user equipment, terminal and UE of the present application include, but are not limited to drones, communication modules on drones, remote-controlled aircrafts, aircrafts, small aircrafts, mobile phones, tablet computers, laptops, vehicle-mounted communication devices, radio sensors, Internet cards, Internet of Things terminals, RFID terminals, NB-IOT terminals, MTC (Machine Type Communication) terminals, eMTC (enhanced MTC) terminals, data cards, Internet cards, vehicle-mounted communication devices, low-cost mobile phones, low-cost tablet computers and other wireless communication devices. The base station or system device in the present application includes, but is not limited to, macro cellular base stations, micro cellular base stations, Femtocells, relay base stations, gNBs (NR nodes B), TRPs (Transmitter Receiver Points) and other wireless communication devices.

The above is only a preferred embodiment of the present application and is not used to limit the scope of protection of the present application. Any modifications, equivalent replacements, improvements, etc. made within the spirit and principles of the present application should be comprised in the scope of protection of the present application.

## Claims

1. A first node for wireless communication, comprising:
A first receiver, receiving first broadcast information on a PBCH of a first cell, wherein the first broadcast information comprises a first bit group, and at least one bit comprised in the first bit group does not belong to a cellBarred domain and does not belong to an intraFreqReselection domain; and obtaining an SIB of the first cell, wherein the SIB of the first cell comprises at least an SIB1, and
wherein the action of obtaining an SIB of the first cell relies on the first bit group; the first broadcast information comprises at least the cellBarred domain in the cellBarred domain and the intraFreqReselection domain; the first node is not RedCap user equipment; and the first node is not capable of supporting an NTN or access of the first node is not for the NTN.

2. The first node according to claim 1, comprising:
a first transmitter, transmitting a first radio signal in a first time-frequency resource block,
wherein the first radio signal is used to request the transmission of the SIB of the first cell, and the first bit group is used to determine the first time-frequency resource block.

3. The first node according to claim 1 or 2, wherein the action of obtaining an SIB of the first cell relying on the first bit group comprises: whether the first cell is allowed to be selected or re-selected relies on the first bit group; the first cell is allowed to be selected or re-selected when the value of a first bit subgroup in the first bit group belongs to a first candidate set; the first cell is not allowed to be selected or re-selected when the value of the first bit subgroup in the first bit group does not belong to the first candidate set; and the first candidate set comprises at least one integer, and the first bit subgroup is a subset of the first bit group.

4. The first node according to any one of elements in claims 1 to 3, wherein the action of obtaining an SIB of the first cell relying on the first bit group comprises: the first bit group is used to indicate at least one of the presence of the SIB of the first cell and time-frequency resources occupied by the SIB of the first cell.

5. The first node according to any one of elements in claims 1 to 4, wherein the first bit group comprises bits in a spare domain.

6. The first node according to any one of elements in claims 1 to 5, wherein the first bit group comprises bits in a first PBCH payload; the bits in the first PBCH payload are generated at a physical layer; and the first PBCH payload is not used for an ssb-SubcarrierOffset domain.

7. The first node according to any one of elements in claims 1 to 6, wherein the first bit group comprises at least some bits in the ssb-SubcarrierOffset domain.

8. The first node according to any one of elements in claims 1 to 7, wherein the first bit group comprises at least some bits in a pdcch-ConfigSIB1 domain.

9. The first node according to any one of elements in claims 1 to 8, wherein the cellBarred domain of the first broadcast information is set as barred.

10. A second node for wireless communication, comprising:
a second transmitter, transmitting first broadcast information on a PBCH of a first cell, wherein the first broadcast information comprises a first bit group, and at least one bit comprised in the first bit group does not belong to a cellBarred domain and does not belong to an intraFreqReselection domain, and
wherein the first bit group is used to indicate that the first node obtains an SIB of the first cell, and the SIB of the first cell comprises at least an SIB1; the first broadcast information comprises at least the cellBarred domain in the cellBarred domain and the intraFreqReselection domain; the first node is not RedCap user equipment; and the first node is not capable of supporting an NTN or access of the first node is not for the NTN.

11. A method used in a first node for wireless communication, comprising:
receiving first broadcast information on a PBCH of a first cell, wherein the first broadcast information comprises a first bit group, and at least one bit comprised in the first bit group does not belong to a cellBarred domain and does not belong to an intraFreqReselection domain; and obtaining an SIB of the first cell, wherein the SIB of the first cell comprises at least an SIB1, and
wherein the action of obtaining an SIB of the first cell relies on the first bit group; the first broadcast information comprises at least the cellBarred domain in the cellBarred domain and the intraFreqReselection domain; the first node is not RedCap user equipment; and the first node is not capable of supporting an NTN or access of the first node is not for the NTN.

12. A method used in a second node for wireless communication, comprising:
transmitting first broadcast information on a PBCH of a first cell, wherein the first broadcast information comprises a first bit group, and at least one bit comprised in the first bit group does not belong to a cellBarred domain and does not belong to an intraFreqReselection domain, and
wherein the first bit group is used to indicate that the first node obtains an SIB of the first cell, and the SIB of the first cell comprises at least an SIB1; the first broadcast information comprises at least the cellBarred domain in the cellBarred domain and the intraFreqReselection domain; the first node is not RedCap user equipment; and the first node is not capable of supporting an NTN or access of the first node is not for the NTN.
